(19) **Europäisches Patentamt**

**European Patent Office**

**Office européen des brevets**

(11) **EP 0 768 770 B1**

(12) **FASCICULE DE BREVET EUROPEEN**

(45) Date de publication et mention
de la délivrance du brevet:
**14.01.2004 Bulletin 2004/03**

(51) Int Cl.⁷: **H04J 3/17**, G10L 19/00

(21) Numéro de dépôt: **96402150.5**

(22) Date de dépôt: **10.10.1996**

(54) **Procédé et dispositif de création d'un bruit de confort dans un système de transmission numérique de parole**

Verfahren und Vorrichtung zur Erzeugung von Hintergrundrauschen in einem digitalen Übertragungssystem

Method and arrangement for the creation of comfort noise in a digital transmission system

(84) Etats contractants désignés:
**DE GB IT**

(30) Priorité: **13.10.1995 FR 9512039**

(43) Date de publication de la demande:
**16.04.1997 Bulletin 1997/16**

(60) Demande divisionnaire:
**03005562.8 / 1 320 087**
**03018358.6 / 1 372 289**

(73) Titulaire: **FRANCE TELECOM**
**75015 Paris (FR)**

(72) Inventeur: **Massaloux, Dominique**
**22700 Perros-Guirec (FR)**

(74) Mandataire: **Fréchède, Michel et al**
**Cabinet Plasseraud**
**84, rue d'Amsterdam**
**75440 Paris Cédex 09 (FR)**

(56) Documents cités:
**EP-A- 0 335 521         EP-A- 0 593 255**
**US-A- 5 276 765**

- **GLOBECOM '89. IEEE GLOBAL TELECOMMUNICATIONS CONFERENCE AND EXHIBITION. COMMUNICATIONS TECHNOLOGY FOR THE 1990S AND BEYOND (CAT. NO.89CH2682-3), DALLAS, TX, USA, 27-30 NOV. 1989, 1989, NEW YORK, NY, USA, IEEE, USA, pages 1070-1074 vol.2, XP002008068 SOUTHCOTT C B ET AL: "Voice control of the pan-European digital mobile radio system"**
- **IEE COLLOQUIUM ON 'DIGITIZED SPEECH COMMUNICATION VIA MOBILE RADIO' (DIGEST NO.139), LONDON, UK, 19 DEC. 1988, 1988, LONDON, UK, IEE, UK, pages 5/1-5, XP002008069 SOUTHCOTT C B: "Speech processing in the Pan-European digital cellular mobile telephone system"**

## Description

L'invention concerne un procédé et un dispositif de création d'un bruit de confort dans un système de transmission numérique de parole discontinue.

De manière générale, les systèmes de transmission de parole discontinue incluent un module d'activité vocale permettant de délivrer une information relative à la présence ou à l'absence du signal vocal. Le signal de parole, délivré par les systèmes précités, comprend ainsi le signal vocal proprement dit précité suivi et/ou précédé par des silences. Lorsqu'un silence ou inactivité est détecté, le système de transmission est commandé de façon, soit à diminuer le débit de signal transmis, soit à couper simplement la transmission.

Lorsque le bruit ambiant de la communication est élevé, la brusque suppression ou modification des caractéristiques de celui-ci, pendant les périodes inactives, produit un effet extrêmement désagréable pour l'auditeur, cet effet pouvant provoquer une impression de rupture de la communication. En outre, le signal de parole atteint parfois les limites de l'intelligibilité.

Afin de remédier aux inconvénients précités, on a proposé, plus récemment, d'insérer pendant les périodes non-actives, un signal synthétique reproduisant le bruit de fond présent avant l'interruption de la transmission. A ce titre, on peut citer les travaux réalisés dans le cadre de l'établissement du cahier des charges du système radiomobile européen à plein débit et à demi-débit.

Le système radiomobile européen à plein débit a fait l'objet de la Recommandation ETSI GSM 06.12. Ce système comprend un dispositif générateur de bruit de confort CNG (*Comfort Noise Generator,* en langage anglo-saxon). Il comprend en outre un codeur de parole produisant des trames de paramètres codées sur 260 bits, toutes les 20 ms. Un détecteur d'activité vocale délivre à chaque trame une information relative au caractère actif ou inactif de la trame. Les paramètres d'amplitude des blocs d'excitation et *Log Area Ratios* (LAR) issus de l'analyse LPC du codeur fournissent des informations sur le niveau ou amplitude et l'enveloppe du spectre de fréquences (LAR) du bruit ambiant. Le générateur de bruit de confort effectue la moyenne de ces paramètres sur un nombre déterminé de trames consécutives, les quantifie selon la procédure de quantification utilisée par le codeur de parole et engendre une trame de description de silence, trame SID (*Silence Inscription Descriptor,* en langage anglo-saxon). Une telle trame est engendrée à la fin d'une période active et toutes les 480 ms de chaque période inactive. Les trames SID sont codées, munies d'un mot de code SID assurant le marquage de ces trames, puis transmises pour réception par un décodeur. Le bruit de confort est synthétisé au décodeur par tirage aléatoire des codes des paramètres de l'excitation, mise à zéro du code de gain du prédicteur à long terme, remplacement des codes correspondants à l'analyse LPC et à l'amplitude des blocs d'excitation par les codes de la trame SID. Le décodage des trames inactives est ensuite effectué comme celui des trames de parole.

Dans un tel dispositif, les modules du générateur de bruit de confort sont externes au codeur et au décodeur de parole, ce qui a pour avantage une plus grande modularité du système au prix d'une augmentation de la complexité du traitement des trames inactives : l'élaboration des trames SID au codeur et la formation aléatoire des codes de l'excitation s'ajoutent au traitement normal des trames de parole. En outre, le décodeur local du codeur de parole, à l'émission, et le décodeur distant, à la réception, ne sont plus synchrones après une période inactive, car le fonctionnement du codeur est indépendant du système.

Le système radiomobile européen à demi-débit dispose également d'un générateur de bruit de confort de structure similaire à celle du système plein débit, confer Recommandation ETSI GSM 06.22 et GSM 06.20. De manière équivalente au processus mis en oeuvre par le générateur CNG du système à plein débit, le générateur CNG utilise les autocorrélations du signal de parole, signal d'entrée, sur 8 trames successives pour évaluer le spectre du bruit ambiant. En ce qui concerne l'énergie, il prend en compte l'énergie de ces 8 trames et procède à la quantification du paramètre du rapport entre l'énergie estimée et l'énergie réelle, paramètre GS, confer Recommandation ETSI GSM 06.20. En outre, le codeur de parole a été adapté de façon à fonctionner pendant les périodes inactives, de façon synchrone avec le décodeur distant, le générateur aléatoire étant réinitialisé à chaque début de la zone inactive.

Enfin, des systèmes mettant en oeuvre des codeurs multidébit ont été proposés, dont le fonctionnement dans un mode opératoire particulier s'apparente à celui d'un CNG. Parmi ceux-ci, on peut citer le codeur multidébit décrit par l'article publié par A.De JACO, W.GARDNER, P.JACOBS et CHONG LEE, intitulé *"QCELP* : *The North American CDMA Digital Cellular Variable Rate Speech Coding Standard",* Proc. IEEE Workshop on Speech Coding for Telecomm, Quebec, Oct.1993, pp.5-6. Dans un tel système, un dispositif de type détecteur d'activité vocale détermine le débit nécessaire à la transmission. Quatre débits sont possibles, 1, 1/2, 1/4 ou 1/8 bit par échantillon. La transmission n'est pas interrompue et les paramètres transmis sont l'enveloppe du spectre via les coefficients LPC et une indication relative à l'énergie d'excitation. Ces paramètres sont transmis à chaque trame et le système à débit le plus bas présente une fonction voisine de celle d'un générateur CNG.

En outre, on peut également citer le système décrit par A.GROSSMAN dans la publication intitulée "*A High performance Audio Codec for Viedoconferencing"* ICSPAT, Santa Clara, Oct.93, pp. 1039-1042. Dans un tel système en bande élargie et à débit variable, une procédure de remplacement des coefficients transformés par des codes de

EP 0 768 770 B1

bruit est utilisée. Cependant, l'enveloppe spectrale du signal est également toujours transmise, un lissage inter-trames étant effectué.

Le procédé et le dispositif de création d'un bruit de confort dans un système de transmission numérique de parole, selon la présente invention, ont pour objet d'atteindre un niveau de qualité de synthèse comparable à celle des systèmes à débit élevé tout en permettant des débits de transmission comparables à ceux des systèmes à forte réduction de débit.

Un autre objet de la présente invention est en outre la création d'un bruit de confort de bonne qualité, représentatif du milieu ambiant tout en minimisant le volume et le débit de données à transmettre pour assurer cette création.

Le procédé et le dispositif de création d'un bruit de confort dans un système de transmission numérique de parole discontinue, dans lequel le signal de parole codé est transmis pendant une période active, pendant laquelle des trames actives sont transmises, chaque période active étant suivie d'une période inactive, pendant laquelle au moins des trames inactives sont transmises, objets de la présente invention, sont remarquables en ce qu'ils consiste à, respectivement permet de, à l'émission, sur détection d'une période inactive :

- engendrer et transmettre une trame de description de silence, consistant en un ensemble de paramètres codés descriptifs du bruit de confort, cette trame de description de silence constituant la première trame de description de silence de la période inactive suivant cette période active ; et pour toute trame inactive courante successive de cette période inactive :
- analyser et mémoriser le spectre de fréquences de cette trame inactive courante ;
- comparer le spectre de fréquences de cette trame inactive courante à un spectre de fréquences de référence, et sur critère d'identité des spectres de fréquences de la trame courante et de référence :
- surseoir à toute transmission notamment celle d'une nouvelle trame de description de silence pendant cette trame inactive courante, et sur critère d'absence d'identité des spectres de fréquences de la trame courante et de référence :
- engendrer et transmettre une nouvelle trame de description de silence pendant cette trame inactive courante, ce qui permet de réduire le débit de transmission du bruit de confort à celui des seules trames de description de silence dont le spectre de fréquences est différent de celui de référence estimé pendant la trame de description de silence précédente.

Le procédé et le dispositif, objets de l'invention, sont également remarquables en ce qu'ils consiste à, respectivement permet de, à la réception, en liaison avec un décodeur de parole :

- décoder, pour chaque trame de description de silence, successive, l'ensemble des paramètres codés descriptifs du bruit de confort, pour engendrer des paramètres décodés ;
- synthétiser au niveau du décodeur de parole, après traitement des paramètres décodés, le bruit de confort correspondant.

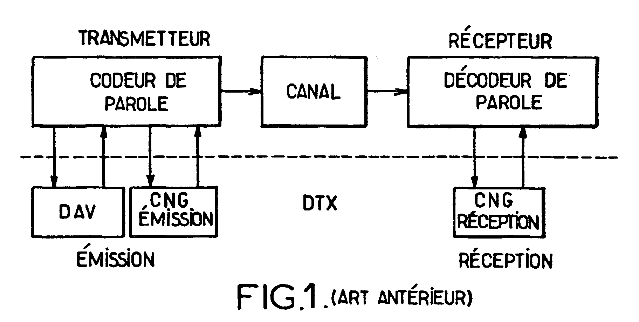

Ils seront mieux compris à la lecture de la description et à l'observation des dessins ci-après, dans lesquels, outre la figure 1 relative à l'art antérieur :

- la figure 2a représente, de manière illustrative, la succession des étapes essentielles permettant la mise en oeuvre du procédé de création d'un bruit de confort, à l'émission, conformément à l'objet de l'invention ;
- la figure 2b représente, sous forme d'organigramme, un mode préférentiel de création de trames de description de silence ;
- la figure 2c représente, de manière illustrative, la succession des étapes essentielles permettant la mise en oeuvre du procédé de création d'un bruit de confort, à la réception, conformément à l'objet de l'invention ;
- la figure 2d représente, de manière illustrative, la succession des étapes essentielles permettant la mise en oeuvre du procédé de création d'un bruit de confort, dans le cas où le codeur de parole est de type prédictif mettant en oeuvre un filtre LPC ;
- la figure 2e représente, de manière illustrative, sous forme de blocs fonctionnels, le schéma d'un dispositif de création à l'émission d'un bruit de confort, conformément au procédé objet de la présente invention ;
- la figure 3a représente, sous forme de blocs fonctionnels, un schéma du dispositif de création, à l'émission, d'un bruit de confort, conformément à l'objet de l'invention, dans le cas plus spécifique où le codeur de parole est de type prédictif ;
- la figure 3b représente un détail de réalisation d'un générateur de bruit de confort mis en oeuvre dans le dispositif représenté en figure 3a ;
- la figure 3c représente, sous forme d'un organigramme fonctionnel, l'ensemble des étapes successives permettant d'engendrer un signal de commande d'émission ou de non-émission d'une trame descriptive de silence ;

- la figure 3d représente, sous forme d'un organigramme fonctionnel, l'ensemble des étapes successives permettant de créer, coder et transmettre une trame de description de silence ;
- la figure 3e représente, sous forme d'un organigramme fonctionnel, l'ensemble des étapes successives permettant d'engendrer un signal d'excitation selon un mode de réalisation préférentiel ;
- la figure 4a représente, sous forme de blocs fonctionnels, un schéma du dispositif de création, à la réception, d'un bruit de confort, conformément à l'objet de l'invention ;
- la figure 4b représente un détail de réalisation du générateur de bruit de confort mis en oeuvre dans le dispositif représenté figure 4a.

Une description plus détaillée du procédé de création d'un bruit de confort conforme à l'objet de la présente invention sera maintenant donnée en liaison avec les figures précédemment mentionnées.

En premier lieu, et préalablement à la description du procédé proprement dit, on rappellera, en liaison avec la figure 1 relative à l'art antérieur, qu'un dispositif de création d'un bruit de confort classique dans un système de transmission numérique de parole comporte, à l'émission, outre un codeur de parole, un détecteur d'activité vocale, noté DAV, et un générateur CNG. L'ensemble permet, à l'émission, de transmettre périodiquement des trames descriptives de silence ou trames SID, selon l'une des méthodes décrites précédemment dans la description sur un canal de transmission proprement dit.

A la réception, un décodeur de parole, décodeur de type prédictif lorsque le codeur de parole utilisé à l'émission est également un codeur de type prédictif, permet d'effectuer le décodage des signaux de parole lorsque ceux-ci sont transmis, respectivement des trames SID, et la création grâce à un générateur CNG à la réception d'un bruit de confort correspondant.

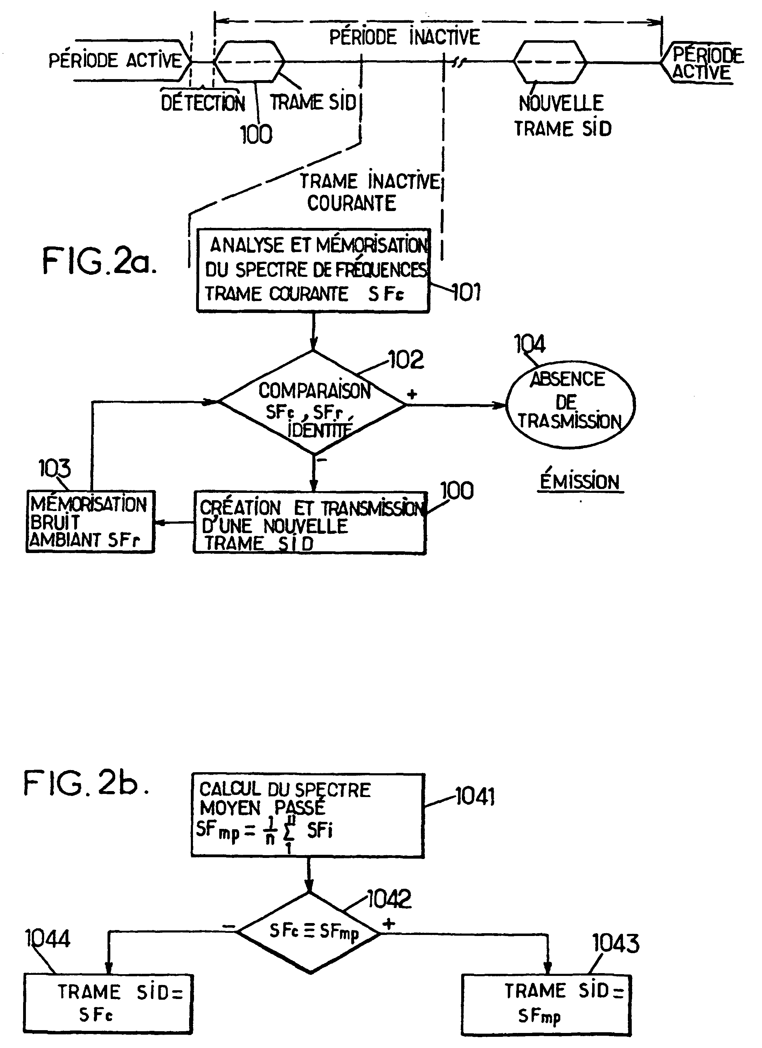

Ainsi qu'on l'a représenté en outre en figure 2a, la transmission numérique de parole est assurée en mode discontinu, cette transmission consistant donc en des périodes actives successives au cours desquelles des trames de signal de parole codé sont transmises, entrecoupées de périodes inactives au cours desquelles aucune trame de signal de parole n'est transmise. La durée respective de ces périodes est quelconque en raison du caractère asynchrone de la transmission.

Ainsi qu'on l'observera en outre sur la figure 2a précitée, le procédé de création d'un bruit de confort, objet de la présente invention, est mis en oeuvre à l'émission, suite à la détection d'une période inactive. La détection d'une période inactive peut par exemple être réalisée à partir du signal délivré par un détecteur d'activité vocale DAV, auquel une temporisation est appliquée, afin de s'assurer du passage effectif en période inactive. Cette temporisation peut également être ajustée afin de tenir compte de la durée de la période de détection, représentée en figure 2a, pour assurer une mise en oeuvre correcte du procédé selon l'invention. Sur la figure 2a précitée, la période de détection est représentée par un intervalle délimité par des pointillés suivant la période active considérée.

Suite à la détection de chaque période inactive, le procédé objet de l'invention consiste à engendrer et transmettre, à l'étape 100 de la figure 2a, dès la fin de la période de détection précitée, une trame SID ou de description de silence. Cette trame de description de silence consiste en un ensemble de paramètres codés descriptifs du bruit de confort. Cette trame de description de silence constitue en fait la première trame inactive de la période inactive suivant la période active et la période de détection précédemment citées.

Ainsi qu'on l'observera en outre sur la figure 2a, le procédé selon l'invention consiste ensuite, pour toute trame inactive courante successive de cette période inactive, à analyser et mémoriser, en une étape 101, le spectre de fréquences de cette trame inactive courante considérée. Le spectre de fréquences de la trame inactive courante précitée est ensuite comparé, en une étape 102, à un spectre de fréquences de référence dont l'obtention sera décrite ultérieurement dans la description.

Sur critère d'identité des spectres de fréquences de la trame courante et de référence, ainsi que représenté à l'étape 102 précitée, le procédé selon l'invention consiste alors, soit à surseoir à toute transmission, notamment celle d'une nouvelle trame de description de silence, trame SID, soit sur critère d'absence d'identité des spectres de fréquences de la trame courante et de référence, à engendrer et transmettre, en une étape 100, cette étape 100 étant réalisée, pour chaque trame SID, selon la même technique utilisée pour la première trame SID, une nouvelle trame de description de silence pendant cette trame inactive courante. Sur la figure 2a, on indique que le sursis de transmission de toute nouvelle trame, sur critère d'identité des spectres de fréquences de la trame de courante et de référence, porte la référence 104.

D'une manière générale, on indique que le procédé objet de la présente invention permet de réduire le débit de transmission du bruit de confort à celui des seules trames de description de silence dont le spectre de fréquences est différent de celui de la trame de description de silence précédente.

Dans un mode de réalisation particulier du procédé de création d'un bruit de confort, objet de la présente invention, on indique que le spectre de fréquences de référence peut être formé à partir du spectre de fréquences du bruit ambiant obtenu lors de la création de chaque trame de description de silence. Ainsi, on comprend que le procédé objet de la présente invention, tel que représenté en figure 2a, peut comporter une étape 103 de mémorisation du bruit ambiant permettant d'obtenir le spectre de fréquences de référence pour chaque trame SID.

En ce qui concerne l'initialisation du procédé objet de la présente invention, on indique que pour la première trame inactive d'une période inactive, l'usage du spectre de référence est inutile puisque la décision d'émission d'une trame de description de silence ne repose pas dans ce cas sur la comparaison du spectre de fréquences de la trame courante et de celui de référence. Pendant cette première trame SID, ce spectre de référence Sfr est, soit estimé, soit, avantageusement, directement obtenu à partir du spectre de référence calculé pour concevoir la trame SID, et mémorisé pour le traitement des trames inactives suivantes. Ce spectre de référence est rafraîchi à chaque nouvelle trame de description de silence émise, selon la même méthode que celle utilisée pour l'initialiser à la première trame SID d'une période inactive.

L'estimation du spectre de fréquences calculé pour chaque trame SID et qui peut également constituer le spectre de fréquences de référence peut être effectué selon le mode de réalisation préférentiel qui sera maintenant décrit en liaison avec la figure 2b.

Dans le mode de réalisation de la figure 2b, le procédé objet de la présente invention consiste à établir chaque trame de description de silence, trame SID, selon un processus particulier permettant en quelque sorte d'adapter chaque trame SID à l'évolution du bruit ambiant, et donc de prendre en compte, pour la création du spectre de la trame SID, certains éléments spécifiques de cette évolution.

Ainsi qu'on l'a représenté sur la figure 2b, le processus d'établissement de chaque trame de description de silence peut comprendre l'étape consistant à déterminer le spectre de fréquences moyen des trames inactives successives pour établir un spectre de fréquences moyen passé, noté SFmp, cette étape portant la référence 1041 sur la figure 2b.

Dans ce cas, le spectre de fréquences moyen passé Smp vérifie la relation (1) :

$$SFmp = 1/n \sum_{1}^{n} SFi$$

Dans cette relation, on indique que, pour une pluralité de trames successives inactives, notées SF1, SFi, SFn, antérieures à la trame inactive courante dont le spectre de fréquences est noté SFc, le spectre de fréquences moyen passé correspond à la moyenne arithmétique sur les n spectres de fréquences des n trames inactives successives précitées.

La création proprement dite de la trame SID est alors réalisée à l'étape 1042 suivante.

L'étape 1042 précitée consiste en un test d'identité du spectre de fréquences moyen passé et du spectre de fréquences de la trame inactive courante symbolisée par la relation (2) : $SFc \equiv SFmp$.

On indique que le critère d'identité ne correspond pas à une identité stricte des spectres de fréquences comparés, une loi ou critère de correspondance pouvant être établi. Cette étape permet en fait de réaliser une mesure de stationnarité locale du spectre de fréquences.

Sur critère d'identité des spectres de fréquences précités, le procédé objet de l'invention consiste alors à sélectionner 1043 comme trame de description de silence SID le spectre moyen passé SFmp, et, sur absence d'identité des spectres de fréquences précédemment cités, en une étape 1044, le spectre de fréquences de la trame inactive courante correspondante.

Ce mode opératoire permet alors, de manière particulièrement avantageuse, d'estimer le spectre de silence de toute trame inactive courante selon qu'une telle trame appartient, soit à une zone spectrale localement stationnaire, soit à une zone spectrale non stationnaire.

Bien entendu, le nombre n de trames inactives successives sur lesquelles le calcul du spectre moyen passé est arbitraire, celui-ci peut par exemple être pris égal de façon à obtenir un intervalle de temps correspondant de l'ordre de 100 ms. On indique en outre que la trame de description de silence SID ainsi constituée est soumise à quantification préalablement à sa transmission.

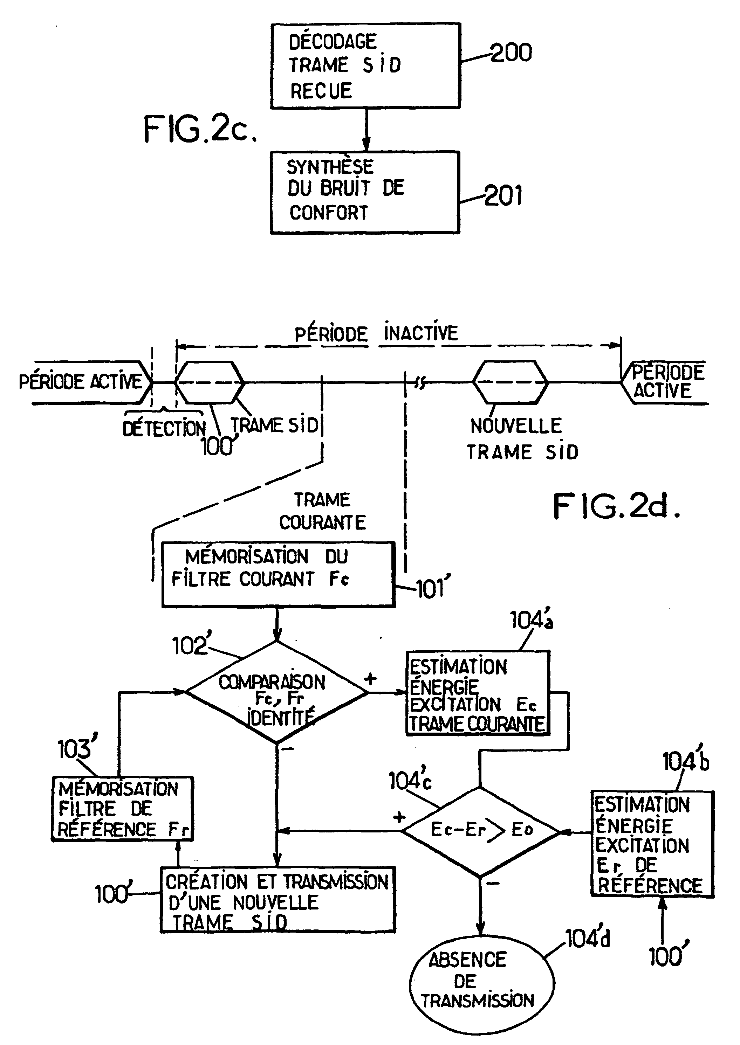

Une description plus détaillée du procédé de création d'un bruit de confort dans un système de transmission numérique de parole discontinue, conforme à l'objet de la présente invention, sera maintenant donnée, à la réception, en liaison avec la figure 2c.

Bien entendu, on indique que, à la réception, le procédé selon l'invention implique l'émission des trames SID selon le procédé précédemment décrit.

En référence à la figure 2c, on indique que le procédé selon l'invention consiste alors à décoder, pour chaque trame de description de silence, successive, l'ensemble des paramètres codés descriptifs du bruit de confort, pour engendrer des paramètres décodés, en une étape 200, puis à synthétiser au niveau du décodeur de parole, après traitement des paramètres décodés, les paramètres permettant au décodeur de parole de synthétiser le bruit de confort correspondant, en une étape 201. On indique en particulier que le traitement des paramètres décodés peut consister en un recodage spécifique approprié.

D' une manière générale, on indique que le procédé de création d'un bruit de confort, objet de la présente invention, peut avantageusement être mis en oeuvre lorsque le codeur de parole et le décodeur de parole utilisés à l'émission, respectivement à la réception, sont de type prédictif.

Dans un tel cas, le signal décodé est obtenu en filtrant un signal d'excitation, ce signal provenant de dictionnaires d'innovation plus éventuellement d'une excitation à long terme, par un filtre de synthèse LPC désigné ci-après par filtre LPC.

Le procédé objet de la présente invention peut alors consister à engendrer un signal d'excitation dont le spectre a des caractéristiques voisines de celles d'un bruit blanc pour exciter un filtre LPC permettant en fait d'effectuer la synthèse du signal pour produire le bruit de confort.

Dans un tel cas, les paramètres représentant le spectre du bruit ambiant sont alors donnés par les coefficients du filtre LPC, pour l'enveloppe du spectre, et par l'énergie du signal d'excitation pour le niveau du spectre précité.

Le procédé objet de la présente invention, à l'émission, reprend les étapes essentielles déjà décrites en liaison avec la figure 2a.

Un tel procédé est décrit et représenté en liaison avec la figure 2d, les mêmes étapes comportant les mêmes références affectées d'un indice ' en ce qui concerne les opérations relatives à la transmission d'une trame de description de silence.

Conformément au mode de mise en oeuvre particulier du procédé selon l'invention représenté en figure 2d, on constate que le procédé mis en oeuvre fonde alors la décision de transmission d'une trame SID ou de non-transmission d'une telle trame sur le caractère de stationnarité du filtre LPC d'une part, et, d'autre part, sur le caractère de stationnarité de l'énergie d'excitation.

Ainsi, suite à la transmission de la première trame SID à l'étape 100', le procédé tel que mis en oeuvre et décrit en figure 2d, consiste à comparer le filtre LPC de la trame courante, noté Fc, par mémorisation en 101' du filtre courant Fc, puis comparaison en 102' du filtre courant Fc au filtre de référence Fr obtenu et mémorisé pendant la précédente trame SID selon l'étape 103'.

Sur absence d'identité des filtres précités à l'étape 102', une nouvelle trame SID est transmise à l'étape 100'. Les étapes 100', 101', 102' et 103' sont sensiblement inchangées par rapport aux étapes 100, 101, 102 et 103 de la figure 2a.

Si, au contraire, les filtres Fc relatifs aux filtres courants et Fr relatifs aux filtres de référence sont identiques, le procédé mis en oeuvre représenté en figure 2d consiste alors à estimer l'énergie d'excitation de la trame courante Ec, en une étape 104'a, et à comparer, en une étape 104'c, l'énergie d'excitation précitée Ec de la trame courante à l'énergie Er de référence estimée pendant la trame SID précédente. Cette estimation est représentée en une étape 104'b sur la figure 2d.

Dans le cas où, en réponse au test de l'étape 104'c, la comparaison de l'énergie d'excitation de la trame courante à celle de l'énergie de référence est significative, cette comparaison pouvant consister en une comparaison de la différence de ces énergies par rapport à une valeur de seuil $E_0$, le procédé consiste alors à créer et transmettre une nouvelle trame SID par retour à l'étape 100' précédemment décrite. Si, au contraire, en réponse au test de l'étape 104'c, la différence entre les énergies d'excitation précitées n'est pas significative, le procédé consiste alors à surseoir à toute transmission d' une trame en l'étape 104'd analogue de l'étape 104d de la figure 2a.

Dans le cadre de la mise en oeuvre du procédé objet de la présente invention tel que représenté en figure 2d, on indique que, pour assurer la comparaison des filtres LPC, on peut utiliser des critères de distance mis en oeuvre notamment par les méthodes de quantification vectorielles des filtres LPC. Les distances précitées peuvent consister en la distance d'ITAKURA-SAITO, celle du maximum de vraisemblance, ou des distances euclidiennes calculées sur des paramètres issus des coefficients LPC, paires de raies spectrales, ou *log area ratios,* par exemple.

En ce qui concerne le caractère de stationnarité en énergie du signal d'excitation, l'absence de linéarité de la sensibilité du système d'écoute humain est exploitée dans les quantificateurs de gain utilisés dans les codeurs. Pour cette raison, le processus de codage précédemment décrit effectue de préférence la comparaison entre l'énergie de l'excitation de la trame courante Ec avec l'énergie de référence Er à partir des indices de quantification de ces énergies. Afin de simplifier la procédure, le quantificateur utilisé est celui servant au calcul de l'énergie codée dans les trames SID.

Le processus d'estimation du filtre LPC et de l'estimation de l'énergie d'excitation pour les trames de description de silence SID sera décrit ultérieurement dans la description, dans le cadre d'un mode de réalisation particulier d'un dispositif générateur de bruit de confort correspondant.

En ce qui concerne le calcul des signaux d'excitation, le procédé objet de la présente invention nécessitant d'engendrer un signal d'excitation dont le spectre a des caractéristiques voisines de celles d'un bruit blanc et dont l'énergie moyenne est celle transmise au décodeur, une méthode simple de synthèse de ce signal d'excitation peut consister à tirer aléatoirement un signal de densité de probabilité uniforme et d'amplitude donnée, calculée à partir de l'énergie transmise par exemple.

Une autre méthode peut consister à synthétiser par tirage aléatoire une excitation de même type que celle utilisée par le codeur de parole, l'avantage de cette deuxième méthode résidant dans la possibilité de réaliser un module externe au décodeur dans la partie réception. D'autre part, d'un point de vue perceptuel, le risque de rupture avec les trames décodées précédentes est plus faible car l'excitation ne change pas brutalement de type. Un mode de réalisation original de la deuxième méthode précitée sera décrit ultérieurement dans la description dans le cadre d'un mode de réalisation particulier d'un dispositif correspondant.

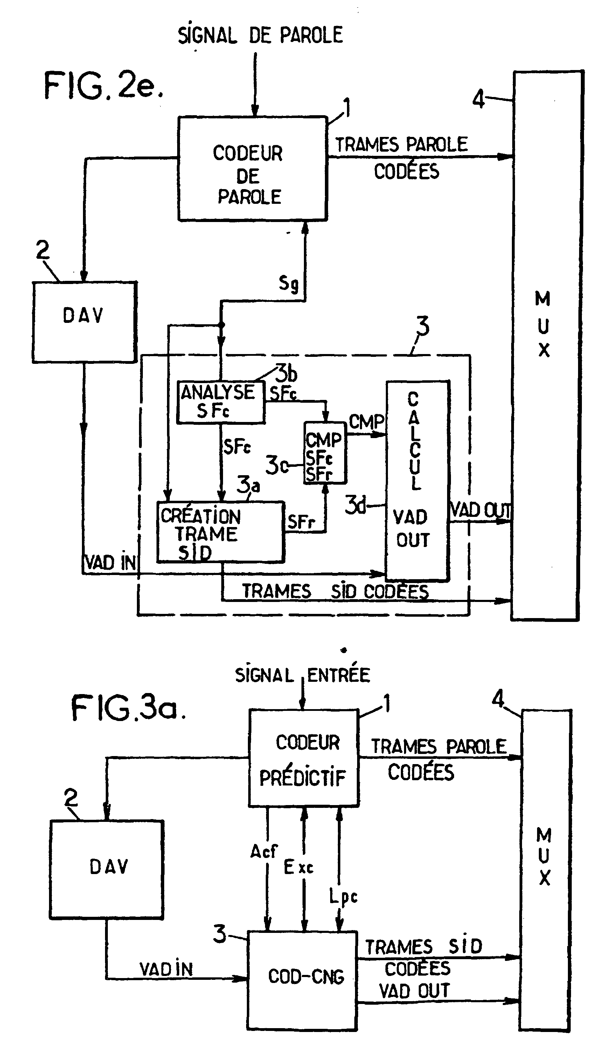

Une description plus détaillée d'un dispositif de création d'un bruit de confort dans un système de transmission numérique de parole discontinue conforme à l'objet de la présente invention, ce dispositif mettant bien entendu en oeuvre le procédé de création d'un tel bruit de confort, ainsi que mentionné précédemment dans la description, sera maintenant donnée en liaison avec la figure 2e.

Ainsi qu'on l'a représenté sur la figure 2e en particulier, le dispositif précité comprend, associé à un codeur de parole portant la référence 1, un module 2 de détection de la fin de chaque période active pendant une période de détection suivant chaque période active. On comprend par exemple que le module 2 peut être constitué par un détecteur d'activité vocale de type classique, interconnecté au codeur de parole 1 et délivrant un signal logique, noté VADin représentatif de la présence d'une période d'activité pendant laquelle des trames de parole codée sont transmises, respectivement d'une période d'absence d'activité pendant laquelle des trames de description de silence doivent être transmises, ou au contraire aucune trame n'est transmise.

En outre, ainsi que représenté sur la même figure 2e, un générateur CNG portant la référence 3 est associé, d'une part, au codeur de parole 1, et, d'autre part, au module 2 d'activité vocale. Un multiplexeur 4 reçoit, d'une part, les trames de parole codées délivrées par le codeur de parole 1 et les signaux constitués par les trame de description de silence ou trames SID codées délivrées par le générateur CNG 3, respectivement un signal représentatif du type de transmission à assurer délivré par ce même générateur CNG 3, et portant la référence VADout.

D'une manière générale, on indique que le dispositif objet de la présente invention, tel que représenté en figure 2e, reprend les principes du processus décrit en liaison avec le procédé selon l'invention. Le générateur CNG 3 comprend un module 3a de création et de transmission conditionnelle, pendant les périodes d'inactivité, d'une trame de description de silence, consistant en un ensemble de paramètres codés descriptifs du bruit de confort, un module 3b d'analyse et de mémorisation du spectre de fréquences de toute trame inactive courante, un module 3c de comparaison du spectre de fréquences de la trame inactive courante à un spectre de fréquences de référence délivrant un signal de commande déterminé sur critère d'identité et d'absence d'identité des spectres de fréquences de la trame courante et de référence, un module 3d d'estimation du type de transmission pour la trame courante délivrant pour toute trame un signal VADout à 3 niveaux codant l'information respectivement trame active, trame non transmise et trame de description de silence.

Ce module 3d reçoit, d'une part, le signal produit par le module 2 de détection d'activité vocale, d'autre part, le signal de comparaison produit par le module 3c ainsi qu'indiqué ci-après. Lorsque la trame courante est active, le module 3d retransmet cette information dans le signal VADout. Sinon, lorsque la trame courante est la première trame inactive de la période active, le module 3d attribue au signal VADout la valeur correspondant à l'information trame de description de silence, autorisant ainsi la transmission d'une nouvelle trame de description de silence. Si la trame courante est une trame inactive mais ne constitue pas la première trame inactive d'une zone d'inactivité, le module 3c compare le spectre de fréquences de la trame courante avec le spectre de fréquences de référence, et sur critère d'identité et d'absence d'identité de ces spectres, délivre le signal CMP représentatif respectivement de l'information trame non transmise et trame de description de silence. Dans ce cas, le module 3d, à partir du signal CMP, assure le codage dans le signal VADout de l'information de transmission permettant de surseoir à toute transmission lors de l'identité des spectres de fréquences de la trame courante et de référence et de réaliser la transmission d'une nouvelle trame de description de silence lors de l'absence d'identité de ces spectres.

Les modules 3a et 3b échangent avec le codeur de parole un certain nombre de signaux de gestion du codeur de parole, notés Sg : en entrée, ces modules reçoivent les données permettant l'évaluation des spectres de fréquences de la trame courante, module 3b, et d'un certain nombre de trames antérieures à la trame courante, module 3a, en sortie, selon les besoins du codeur de parole, le module 3a communique le cas échéant au codeur de parole les signaux permettant de remettre à jour ses mémoires, pour éviter une désynchronisation avec le décodeur de parole situé à la réception.

En entrée, le module 3a reçoit également le spectre de fréquences de la trame courante engendré par le module 3b, signal $SF_c$.

Une description plus détaillée d'un dispositif de création d'un bruit de confort sera maintenant donnée en liaison avec la figure 3a dans le cas particulier avantageux dans lequel le codeur de parole 1 est un codeur de parole prédictif, comportant pour chaque trame de parole un module d'analyse LPC d'ordre d'analyse M, l'ordre d'analyse étant défini à partir du nombre de coefficients du filtre LPC, produisant notamment les (M+1) coefficients de fonction d'autocorrélation Acf du signal de parole, les M paramètres représentatifs du filtre LPC de la trame, notés Lpc, étant codés à l'aide d'une méthode de codage prédictif utilisant pour chaque trame les paramètres Lpc des trames précédentes. Le codage prédictif des paramètres Lpc n'est pas nécessaire pour le fonctionnement du présent dispositif, mais présente cependant des répercussions sur la conception de ce dernier. Dans le cas d'un codeur n'utilisant pas de codage prédictif des paramètres Lpc, le dispositif pourra facilement être simplifié.

Le codeur de parole 1 élabore et mémorise par exemple à l'aide de techniques d'analyse-par-synthèse un signal d'excitation, noté dans ce qui suit Exc, identique à celui calculé au décodeur pour exciter le filtre de synthèse LPC.

La figure 3a reprend l'architecture générale du dispositif représenté précédemment en figure 2e. Le générateur CNG 3 reçoit, du codeur de parole 1 de type prédictif, la fonction d'autocorrélation Acf du signal de parole, les paramètres Lpc de la trame précédente, et, le cas échéant, un certain nombre d'échantillons du signal d'excitation Exc (n) partiellement constitutifs du signal d'excitation Exc, issus des trames précédentes. On indique que l'introduction des échantillons précités est conditionnelle à l'utilisation, pour la synthèse du bruit de confort, de l'excitation à long terme du codeur prédictif.

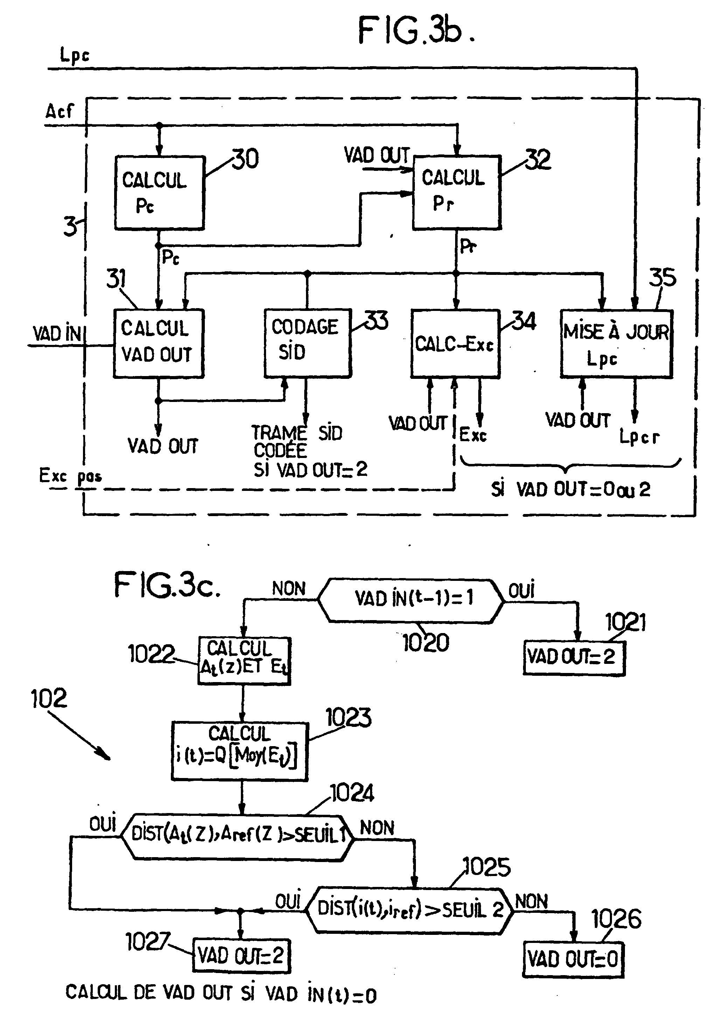

Une description plus détaillée du générateur CNG 3 mis en oeuvre conformément à l'objet de la présente invention sera maintenant donnée en liaison avec la figure 3b. Ce mode de réalisation correspond au cas où le codeur de parole est un codeur de type prédictif.

Ainsi qu'on l'observera sur la figure 3b, le dispositif objet de la présente invention et en particulier le générateur CNG 3 comportent un module 30 de calcul des paramètres relatifs à la trame courante Pc, recevant le signal de fonction d'autocorrélation du signal de parole Acf et produisant en sortie les signaux correspondant aux paramètres de la trame courante Pc. Ces paramètres comprennent le filtre courant Fc et l'énergie d'excitation courante $E_c$.

Le générateur CNG 3 comprend également, ainsi que représenté sur la figure 3b, un module 31 de décision d'émission d'une trame de parole codée, ou d'une trame de description de silence, trame SID, ou de suspension d'émission, recevant le signal d'activité vocale VADin et les paramètres relatifs à la trame courante Pc et les paramètres de référence Pr délivrés par un module 32, lequel sera décrit ultérieurement. Ce module 31 délivre un signal de type de transmission à trois niveaux, signal noté VADout, un premier niveau VADout = 0 correspondant à l'absence totale d'émission pendant une trame courante inactive, c'est-à-dire pour le signal VADin = 0, signal délivré par le module 2 de détection d'activité vocale, un deuxième niveau VADout = 1 correspondant à l'émission d'une trame de parole codée pendant une trame active, c'est-à-dire pour VADin = 1, et un troisième niveau VADout = 2 correspondant à l'émission d'une trame SID pendant une trame inactive, c'est-à-dire pour VADin = 0.

Le générateur CNG 3 comprend également un module 32 calculant conditionnellement au signal entrant VADout les signaux correspondant aux paramètres de référence Pr calculés à chaque trame SID. Ces pramètres comprennent le filtre de référence Fr et l'énergie d'excitation de référence Er. Ce module reçoit en entrée les signaux d'autocorrélation Acf et les paramètres de la trame courante Pc.

Le générateur CNG 3 comprend ensuite un module 33 générateur de trame de description de silence SID sous forme codée, recevant le signal de type de transmission VADout, et les signaux correspondant aux paramètres de référence Pr, et délivrant conditionnellement un signal de trame de description de silence codée.

Le générateur CNG 3 comprend ensuite un module 34 générateur d'un signal d'excitation Exc, recevant le signal de type de transmission VADout, les signaux correspondant aux paramètres de référence Pr et, le cas échéant, selon la méthode de génération adoptée, un certain nombre d'échantillons passés Excpas du signal d'excitation fournis par le codeur de parole. Ce module délivre, conditionnellement au signal VADout, un signal d'excitation pour la trame courante Exc.

Le générateur CNG 3 comprend enfin un module 35 générateur d'un signal descriptif des paramètres de filtrage Lpc réactualisés, recevant le signal de type de transmission VADout, et les signaux correspondant aux paramètres de référence Pr, le signal descriptif des paramètres Lpc des trames précédentes délivré par le codeur de parole 1, et réactualisant, conditionnellement à VADout, ce signal pour la trame courante, Lpcr.

Le fonctionnement du module générateur CNG 3 est le suivant :

En entrée, le module générateur CNG 3 reçoit l'information VADin trame inactive 0, trame active 1, délivrée par le module 2 détecteur d'activité vocale. Il reçoit également du module codeur de parole 1 et pour chaque trame :

- le signal de fonction d'autocorrélation du signal de parole de la trame courante Acf,
- le signal descriptif des paramètres Lpc relatifs au moins à la trame précédente, ce signal étant référencé Lpc et correspondant aux paramètres Lpc d'au moins la trame précédente du codeur 1, paramètres utilisés par le quantificateur prédictif, du codeur de parole,
- le cas échéant le signal d'excitation passé.

Le module générateur CNG 3 produit en sortie, pour chaque trame, le signal de type de transmission à trois niveaux VADout précédemment mentionné.

Pour les trames de description de silence SID, le générateur CNG 3 produit en outre les paramètres d'insertion de silence codés, constitutifs des trames SID.

Pour les trames inactives, c'est-à-dire telles que le signal d'activité délivré par le module d'activité vocale 2, VADin, est égal à 0, le module générateur CNG 3 délivre de plus, le cas échéant, un signal d'excitation de la trame courante Exc, et le signal Lpcr des paramètres Lpc réactualisés.

Le fonctionnement gobal du générateur CNG 3 peut être résumé de la façon ci-après :

- si le signal VADin est égal à 1, la trame est active et le générateur CNG 3 se contente de répercuter cette information dans VADout = 1 ;
- sinon, le module 30 évalue tout d'abord les pramètres relatifs à la trame courante Pc.

Ensuite, le module 31 décide si la trame courante doit être non transmise ou constituer une trame SID à transmettre :

- si la trame courante est la première trame inactive après une période d'activité, alors, c'est une trame SID,
- sinon, le module 31 utilise les paramètres de référence Pr engendrés par le module 32 de calcul des paramètres de référence à la précédente trame SID et établit si la trame courante est une trame SID.

Si la trame courante est une trame SID, alors, VADout = 2, sinon VADout = 0.

Si la trame courante est une trame SID, le module 33 code les paramètres de la trame SID.

Dans les deux cas précédents, c'est-à-dire pour VADout = 0 ou 2, le module 34 engendre, puis met à jour le signal d'excitation reltif à la trame courante Exc, et le module 35 met à jour le signal représentatif des paramètres Lpc.

Une description plus détaillée du mode opératoire du module 31 de décision d'émission d'une trame de parole codée, ou d'une trame de description de silence, trame SID, ou de suspension d'émission, sera maintenant donnée en liaison avec la figure 3c.

Un test 1020 sur le signal VADin relatif à la trame précédente, indicée t-1, pour déterminer si la trame courante est la première trame inactive, soit VADin(t-1) = 1 pour VADin(t) = 0, provoque en 1021 la création d'un signal VADout = 2, c'est-à-dire la décision de transmission d'une trame SID.

Au contraire, sur réponse négative au test 1020, soit lorsque VADin(t-1) = 0, la trame précédente étant inactive, le filtre LPC relatif à la trame courante est calculé à l'étape 1022 à partir de la relation (3) :

$$A_t(z) \;=\; \sum_{i=0}^{M} a_t(i)z^{-1}, a_t(0) = 1$$

Dans cette relation, on indique que les coefficients $a_t(i)$ désignent les coefficients du filtre LPC calculés à partir des coefficients d'autocorrélation du signal d'autocorrélation Acf précédemment mentionnés, i désignant l'indice de chaque coefficient.

La valeur de ce filtre est comparée à un filtre de référence de fonction de transfert $A_{ref}(z)$ mémorisé pendant la trame SID précédente, ainsi que décrit précédemment dans la description relativement à la mise en oeuvre du procédé selon l'invention. Cette comparaison peut être effectuée à l'aide de la distance d'Itakura-Saito précitée. Cette distance est comparée à une valeur de seuil, ce qui permet d'éviter la nécessité de calcul d'un logarithme et de supprimer toute opération de division, la comparaison à la valeur de seuil étant réalisée selon la relation (4) ci-après :

$$\sum_{i=0}^{M} R_{Aref}(i) \times Acf_t(1) > Err_t \times seuil1$$

Dans la relation précitée, $Err_t$ désigne l'énergie résiduelle LPC pour la trame courante, somme des carrés du signal résiduel LPC, cette énergie résiduelle pouvant être obtenue dans la procédure de calcul du filtre par la méthode de Levinson/Durbin, $R_{Aref}$ désigne une fonction dérivée de l'autocorrélation des coefficients du filtre de référence $A_{ref}(z)$ vérifiant la relation (5) :

$$\begin{cases} R_{Aref}(0) & = & \sum_{i=0}^{M} A_{ref}(i)^2 \\ \\ R_{Aref}(i) & = & 2\sum_{j=0}^{M-i} A_{ref}(j) \times A_{ref}(j+i), i = 1 \to M \end{cases}$$

Lorsque l'inégalité de la relation (4) est vérifiée, le filtre LPC n'est pas considéré comme semblable au filtre de référence, la trame courante est alors définie comme une nouvelle trame SID, VADout = 2.

Sinon : dans la même étape 1022, une opération d'estimation de l'énergie de l'excitation de la trame courante $E_t$ est effectuée à partir de l'énergie résiduelle LPC $Err_t$. Pour procéder à l'estimation de l'énergie d'excitation courante $E_t$, l'énergie résiduelle LPC $Err_t$ est multipliée par un facteur noté CE estimé par apprentissage. On calcule ensuite la moyenne de ces énergies sur m trames, m étant par exemple un entier correspondant à un intervalle de temps de 100 à 200 ms, et l'on procède à une opération de quantification, notée Q(.), selon la relation (6) :

$$i(t) = Q(\frac{1}{m}\sum_{j=t-m+1}^{t} E_j)$$

dans laquelle i(t) désigne l'indice de quantification de l'énergie moyenne des m trames consécutives comprenant la trame courante, cette opération étant réalisée en une étape 1023 sur la figure 3c.

On indique que le nombre m de trames précité est initialisé à 1 au début de chaque zone inactive, puis il peut être incrémenté à chaque trame jusqu'à une valeur maximum déterminée.

L'opération 1023 précitée est alors suivie d'une opération 1024 consistant à comparer le filtre LPC de la trame courante et le filtre de référence $A_{ref}(z)$ ainsi que mentionné précédemment. Sur réponse positive au test 1024 précité, le signal VADout est positionné à 2 à l'étape 1027 autorisant ainsi la transmission d'une trame SID. Sur réponse négative au test 1024, un test 1025 est alors effectué, ce test 1025 consistant en un test sur les valeurs quantifiées de la moyenne des énergies obtenues à la relation (6) précédente, l'indice de quantification pour la trame courante i (t) étant comparé à celui de la trame de référence obtenue pendant la trame SID précédente, notée $i_{ref}$ selon la relation (7) :

$$|i(t)-i_{ref}| > seuil2.$$

Sur réponse positive au test 1025, l'inégalité étant vérifiée, le niveau d'énergie de l'excitation a changé et la trame courante est alors définie comme trame SID.

Sur réponse négative au test 1025, la trame courante est définie comme une trame de silence non transmise 1026, le signal VADout étant égal à 0.

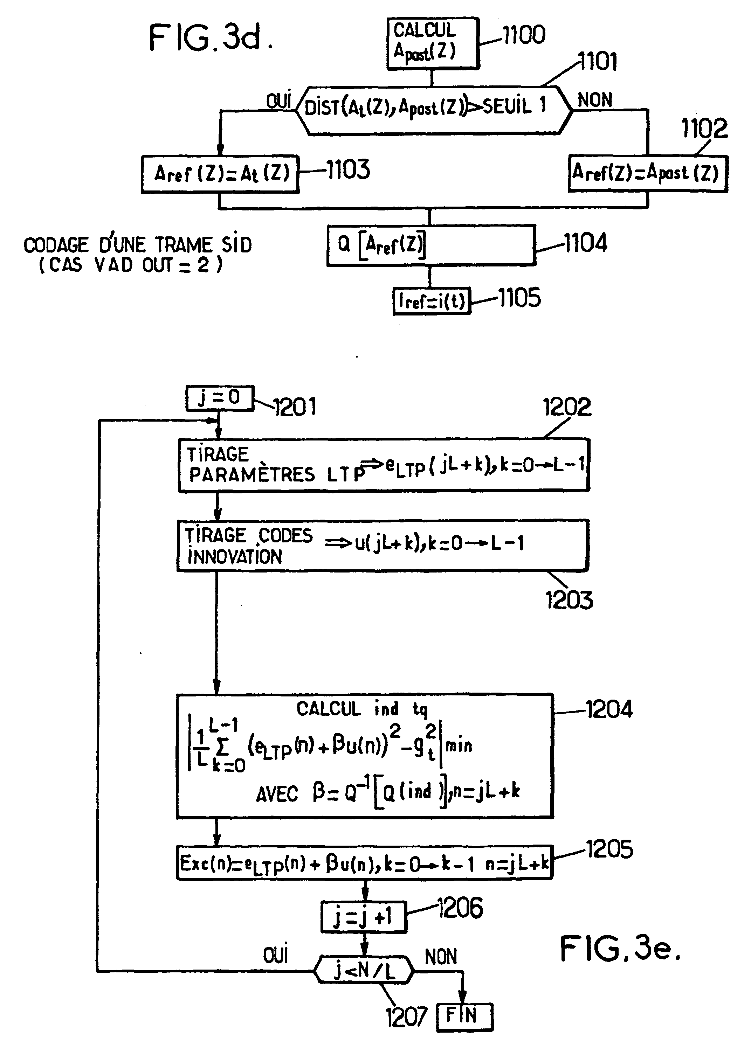

Une description plus détaillée du mode opératoire du module 31 générateur de trame de description de silence, trame SID codée, sera maintenant donnée en liaison avec la figure 3d.

D'une manière générale, on indique que lors du codage d'une trame SID, un nouveau filtre de référence $A_{ref}$ (z) est calculé.

En premier lieu, et pour la réalisation de cette opération, un filtre LPC moyen passé, dont la fonction de transfert est notée $A_{past}(z)$, est évalué à l'étape 1100 selon la relation (8) :

$$A_{past}(z) = \underset{j=t-p1-t-1}{Moy} (A_j(z))$$

Ce filtre est calculé à partir de la somme des autocorrélations du signal, notées Acf précédemment, des $P_1$ trames précédant la trame courante. Un calcul d'autocorrélation $R_{Apast}$ des coefficients de ce filtre est alors réalisé conformément à la méthode donnée par la relation (5) précitée.

Un test de mesure de stationnarité locale est effectué en 1101 de manière semblable au test 1024 décrit en relation avec la figure 3c, conformément à la relation (2) précédemment mentionnée. La valeur de seuil pour le test 1101 est une valeur particulière égale à seuil1. Sur réponse positive au test 1101 précité, l'étape 1103 permet de sélectionner le filtre courant comme filtre de référence selon la relation $A_{ref}(z) = A_t(z)$ et la nouvelle fonction d'autocorrélation du filtre de référence $R_{Aref}$ est alors calculée.

Sur réponse négative au test 1101, le filtre moyen passé est sélectionné comme filtre de référence selon la relation $A_{ref}(z) = A_{past}(z)$ et la fonction d'autocorrélation des coefficients du filtre de référence est réactualisée suivant la relation (9) :

$$R_{Aref}(i) = R_{Apast}(i), i = 0 \rightarrow M.$$

Une étape de quantification 1104 est alors effectuée sur les paramètres représentant le filtre de référence sélectionné précédemment 1104, l'opération de quantification étant réalisée selon la procédure utilisée par le codeur, le code ainsi obtenu étant inséré dans la trame SID codée.

En une étape 1105, l'énergie d'excitation déjà calculée et quantifiée en 1023 i(t) est insérée dans la trame SID correspondante et mémorisée comme énergie de référence $i_{ref}$.

En ce qui concerne la synthèse du signal d'excitation, on indique que $i_{ref}$ désignant l'indice de quantification de l'énergie de référence, $g_{ref}$ désigne le gain restitué égal à la racine carrée de l'énergie moyenne par échantillon, obtenu par la relation :

$$g_{ref} = \sqrt{Q^{-1}(i_{ref})}$$

où $Q^{-1}$ représente l'opération de quantification inverse.

Le gain $g_t$ de la trame courante est alors donné par :

- $g_t = g_{ref}$ au début d'une période inactive,
- $g_t = \alpha \times g_{t-1} + (1-\alpha) \times g_{ref}$ en période inactive.

Dans cette relation, $\alpha$ est un coefficient réel compris entre 0 et 1.

Dans une première méthode précédemment mentionnée dans la description relativement à la mise en oeuvre du procédé objet de la présente invention, la synthèse du signal d'excitation peut être réalisée par tirage aléatoire d'échantillons. Dans ce cas, on indique que le tirage de N échantillons d'excitation d'une trame peut être effectué dans l'intervalle $[-g_t \times \sqrt{3}, g_t \times \sqrt{3}]$ au moyen d'un générateur aléatoire de loi uniforme.

Une deuxième méthode de synthèse du signal d'excitation consiste à tirer aléatoirement les codes des paramètres caractérisant le signal d'excitation Exc et à fournir directement ces codes au décodeur. Cette méthode présente l'avantage de permettre une implantation autonome du générateur de bruit de confort au décodeur, et évite les éventuelles discontinuités dans le signal d'excitation au moment du basculement entre les trames actives et le bruit de confort. Les codes des paramètres de l'excitation devront être ajustés pour que l'énergie de l'excitation décodée pour la trame courante corresponde à l'énergie souhaitée, à savoir $Ng_t^2$, $g_t^2$ correspondant à l'énergie moyenne par échantillon et $Ng_t^2$ désignant l'énergie à obtenir pour les N échantillons constitutifs de cette trame.

Le plus simple, lorsque les codeurs de parole utilisent une prédiction à long terme, ou de manière équivalente un dictionnaire adaptatif utilisant les échantillons de l'excitation pasée, est de supprimer cette excitation en sélectionnant le plus petit gain quantifié de l'excitation LTP, excitation de prédiction à long terme, gain généralement nul ou voisin de zéro. L'excitation produite est alors pratiquement réduite à l'innovation dont on contrôle facilement l'énergie. Cependant, pour beaucoup de codeurs de parole, la suppression de l'excitation à long terme produit une excitation spectralement pauvre, dont les caractéristiques ne sont pas celles d'un bruit blanc et la qualité du bruit de confort synthétisé par le décodeur s'en ressent.

Une méthode particulièrement avantageuse permettant d'utiliser l'excitation LTP et de contrôler le gain de l'excitation gobale obtenue par addition de l'excitation LTP et d'une innovation est maintenant décrite, en liaison avec la figure 3e.

Notons tout d'abord que, selon cette méthode, le codeur de parole doit communiquer au module CNG 3 un certain nombre d'échantillons du signal d'excitation Excpas issus des trames passées, signal représenté en pointillé dans la figure 3b.

Dans ce mode de réalisation, la trame de N échantillons est divisée en N/L blocs de L échantillons sur lesquels sont calculés et codés les paramètres de l'excitation. Selon les besoins du codeur de parole, ces blocs peuvent être subdivisés, la période de calcul des codes de l'excitation à long terme ne correspondant pas nécessairement à celle de l'innovation.

Sur la figure 3e, l'étape 1201 permet d'initialiser à 0 la variable de comptage j relative à la complétude d'un bloc de N/L échantillons.

Le signal d'excitation Exc constitué par des échantillons Exc(n) avec n = 0 à N-1 est défini pour la trame courante comme la combinaison linéaire d'une excitation de prédiction à long terme, notée $e_{LTP}(n)$, et une excitation innovatrice, notée $\beta\,u(n)$, u(n) désignant la forme d'onde innovatrice et β son gain après déquantification, gain que l'on cherche à ajuster, pour chaque bloc, de manière à contrôler l'énergie de l'excitation ainsi engendrée.

Pour chaque bloc d'indice j, les codes des paramètres de l'excitation à long terme sont tirés aléatoirement, en une étpe 1202. Une contrainte est préférable sur le code du gain de l'excitation à long terme pour limiter l'énergie de celle-ci. On obtient ainsi les L échantillons du signal $e_{LTP}(n)$, avec n = jL+k, k variant de 0 à L-1, sur le bloc, en utilisant les échantillons du signal passé Excpas fourni par le codeur de parole.

Le signal d'excitation d'innovation est ensuite obtenu, en une étape 1203, par tirage aléatoire du code de la forme d'onde d'innovation. On obtient alors les L échantillons de la forme d'onde u(n), avec n = jL+k, k variant de 0 à L-1, sur le bloc.

L'étape 1204 permet de rechercher l'indice de quantification ind du gain de l'excitation d'innovation, et donc, par l'opération de déquantification, le gain β associé. On sélectionnera l'indice permettant d'obtenir sur le bloc l'énergie moyenne par échantillon la plus proche possible de la valeur souhaitée $g_t{}^2$ selon la relation (10) :

$$\left|\frac{1}{L}\sum_{n=jL}^{(j+1)L-1}(e_{LTP}(n) + \beta u(n))^2 - g_t{}^2\right| \text{minimum}$$

le gain β parcourant l'ensemble des valeurs de restitution du quantificateur de gains de l'excitation de l'innovation.

Une variante de la présente méthode, dans le cas où les gains de l'excitation à long terme et de l'excitation d'innovation sont quantifiés conjointement par un quantificateur vectoriel, est la suivante : dans l'étape 1202, l'excitation $e_{LTP}(n)$ est obtenue par tirage aléatoire des codes représentant le délai LTP, pour un gain égal à 1. La relation (10) est ensuite modifiée en (11) :

$$\left|\frac{1}{L}\sum_{n=jL}^{(j+1)L-1}(\beta_1 e_{LTP}(n) + \beta_2 u(n))^2 - g_t{}^2\right| \text{minimum}$$

les gains déquantifiés $\beta_1$, $\beta_2$ étant sélectionnés conjointement par exploration du dictionnaire du quantificateur vectoriel.

L'étape 1204 est suivie d'une étape 1205 où le signal d'excitation Exc est mis à jour par le calcul de Exc pour les échantillons du bloc courant.

Une incrémentation de la variable de comptage j, en une étape 1206 suivie d'un test de la valeur de cette variable, en 1207, permettent de compléter l'obtention du signal d'excitation pour l'ensemble des échantillons constitutifs d'une trame.

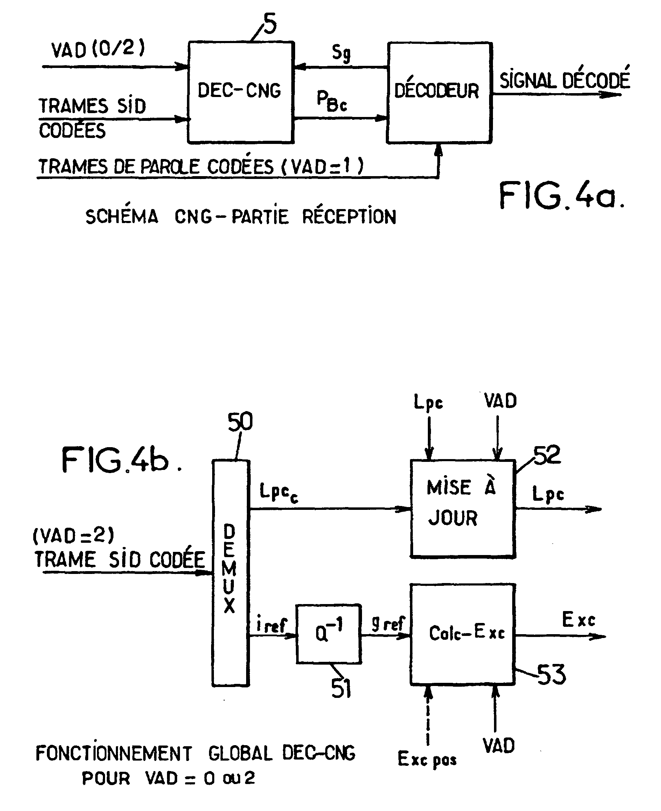

Une description plus détaillée du dispositif générateur d'un bruit de confort dans un système de transmission numérique de parole discontinue, au niveau de la réception, sera maintenant donnée en liaison avec les figures 4a et 4b.

Ainsi qu'on l'a représenté sur la figure 4a, on indique que le dispositif à la réception comprend un module 5 de décodage du bruit de confort ou, plus particulièrement, dans chaque trame de description de silence successive, de l'ensemble des paramètres codés descriptifs de ce bruit de confort.

Le module 5 est associé au décodeur de parole proprement dit et il reçoit l'information relative au type de trame courante traitée par ce module 5, information notée VAD, cette information reproduisant l'information du signal à 3 niveaux VADout engendré à l'émission, ainsi bien entendu que les trames de description de silence ou trames SID codées. Il reçoit en outre du décodeur de parole un signal de gestion Sg assurant la synchronisation avec le décodeur.

Le module 5 permet d'engendrer des paramètres descriptifs du bruit de confort PBc relatifs à la trame courante.

Le décodeur de signal de parole reçoit, d'une part, les trames de parole codées, et, d'autre part, le signal descriptif des paramètres du bruit de confort PBc relatif à la trame courante. Il délivre par synthèse un signal de parole synthétisé, désigné par le terme signal décodé, sur la figure précitée.

Le module 5 représenté en figure 4a sera maintenant décrit de manière plus détaillée en figure 4b dans le cas où le décodeur de signal de parole est formé par un décodeur prédictif. Le module de décodage 5 comporte, au moins, un démultiplexeur 50 recevant le signal de trame de description de silence codé transmis et délivrant un signal codé descriptif des paramètres de filtrage LPC, ce signal relatif à la trame courante étant noté $Lpc_c$ sur la figure 4b, ainsi que un signal d'indice de gain quantifié $i_{ref}$, descriptif du niveau du signal d'excitation synthétisé. Ces paramètres sont utilisés jusqu'à la trame SID suivante.

En outre, un module 51 déquantificateur est prévu, lequel reçoit le signal d'indice de gain quantifié précité et délivre un signal de gain déquantifié, noté $g_{ref}$.

Un module de calcul 52 est prévu, lequel reçoit le signal codé descriptif des paramètres de filtrage LPC relatif à la trame courante, noté $Lpc_c$, le signal descriptif des paramètres de filtrage LPC relatif au moins à la trame précédente, noté Lpc, et l'information de type de transmission de trame, noté VAD. Le module de calcul 52 délivre alors le signal LPC mis à jour avec les paramètres LPC de la trame courante.

Enfin, un module 53 générateur d'excitation est prévu, lequel reçoit le signal de gain déquantifié $g_{ref}$, le cas échéant le signal d' excitation passé et l'information de type de trame VAD, et délivre le signal d'excitation relatif à la trame courante Exc.

Le module 5 décodeur ne fonctionne que lorsque les trames ne sont pas actives.

En entrée, il reçoit l'information donnée par le signal VAD 0 : trame non transmise, 2 : trame SID et, dans le cas d'une trame SID, les paramètres codés de la trame. Le décodeur de parole fournit d'autre part les données ci-après :

- les paramètres LPC relatifs au moins à la trame précédente utilisés par le quantificateur prédictif, le signal relatif à ces paramètres LPC de la trame précédente étant noté Lpc ;
- le signal d'excitation passée Excpas, mémoire du prédicteur à long terme.

En sortie, le module 5 de décodage produit pour chaque trame inactive les N nouveaux échantillons du signal d'excitation Exc et des nouveaux paramètres LPC après déquantification, notés Lpc.

Le décodeur de parole utilise ces données pour réaliser la synthèse des trames inactives.

Lorsque le signal VAD = 2, les paramètres de la trame SID, $Lpc_c$ et $i_{ref}$ pour l'énergie quantifiée sont décodés et mémorisés. On notera $Lpc_{ref}$ et $g_{ref}$ les paramètres mémorisés dans cette étape-là.

Lorsque VAD = 0, le module de calcul 52 calcule un nouvel ensemble de paramètres LPC en quantifiant et déquantifiant $Lpc_{ref}$ en utilisant les paramètres passés Lpc fournis par le décodeur, le gain déquantifié $g_{ref}$ ne changeant pas et le gain relatif à la trame courante $g_t$ étant mis à jour selon la relation précédemment mentionnée dans la description.

Dans les deux cas, le module 53 calcule la nouvelle excitation Exc relative à la trame courante, selon l'une ou l'autre des méthodes décrites précédemment dans la description, et la transmet au décodeur de parole, lequel effectue la synthèse du signal décodé des trames inactives.

On notera que le module 5 décodeur de bruit de confort peut être rendu totalement autonome et implanté de manière externe au décodeur. Dans ce cas, les processus utilisés sont les mêmes moyennant un transfert de certaines fonctions élémentaires du décodeur dans ce module.

Enfin, dans un mode de réalisation particulier, les valeurs préférentielles des paramètres précédemment mentionnées dans la description étaient les suivantes, pour une trame N=240 échantillons échantillonnés à une fréquence de 8 kHz :

| Paramètre | Usage | Valeur |
|---|---|---|
| $p_1$ | nombre de trames/filtre moyen | 3 |
| $p_2$ | nombre de trames/moyenne énergies | 3 |
| seuil1 | seuil stationnarité spectrale | 0.07 |
| seuil2 | seuil stationnarité énergies | 3 |
| $C_E$ | facteur de correction de *Err*, | 2.70 |

Le facteur de correction $C_E$ et les valeurs précédentes étaient adaptées pour le codeur prédictif G 723 normalisé par l'U.I.T., codeur de type prédictif pour la visiophonie RTC.

On a ainsi décrit un procédé et un dispositif de création d'un bruit de confort dans un système de transmission numérique de parole discontinue particulièrement performant.

Le procédé et le dispositif objets de l'invention sont particulièrement avantageux dans la mesure où, s'appuyant sur une analyse du signal au cours des périodes inactives, un processus de rafraîchissement des paramètres, utilisés pour reproduire le bruit lorsque les caractéristiques de celui-ci ont changé est réalisé. L'envoi de trames SID n'est pas limité à la première trame inactive, ni non plus reproduit périodiquement, mais commandé par le dispositif lui-même, ce qui permet d'assurer une bonne qualité de bruit de confort tout en minimisant le volume de données à transmettre.

Ils sont remarquables par le fait qu'afin d'estimer des paramètres permettant de former les trames SID, ils mettent en oeuvre une méthode efficace prenant en compte la stationnarité ou la non-stationnarité du bruit ambiant, restituant l'évolution de ce dernier.

Dans le cas plus particulier d'un dispositif associé à un codeur de parole de type prédictif, dans le but d'estimer la stationnarité en énergie, le procédé objet de la présente invention effectue une comparaison des énergies du signal d'excitation quantifié, ce qui permet de tirer parti des propriétés perceptuelles du quantificateur de manière simple.

Enfin, dans le cas de la mise en oeuvre de la deuxième méthode de synthèse de l'onde excitatrice, le procédé objet de la présente invention propose un moyen d'utiliser un dictionnaire adaptatif LTP en plus du dictionnaire d'innovation, une méthode permettant l'ajustement du gain à l'énergie transmise étant développée. Les formes d'ondes excitatrices ainsi créées possèdent en général une plus grande richesse spectrale que celle n'utilisant que les dictionnaires d'innovation.

Enfin, l'ensemble permet la mise en oeuvre et la création d'un bruit de bonne qualité, lequel est synthétisé même lorsque le taux moyen de transmission est faible, et ce, au prix d'une complexité de calcul modérée.

## Revendications

**1.** Procédé de création d'un bruit de confort dans un système de transmission numérique de parole discontinue, dans lequel le signal de parole codé est transmis pendant une période active, pendant laquelle des trames actives sont transmises, chaque période active étant suivie d'une période inactive, pendant laquelle au moins des trames inactives sont transmises, ce procédé consistant, à l'émission, sur détection d'une période inactive, à :

- engendrer et transmettre une trame de description de silence, consistant en un ensemble de paramètres codés descriptifs du bruit de confort, cette trame de description de silence constituant la première trame de description de silence de la période inactive suivant cette période active ; le procédé étant **caractérisé en ce qu'**il consiste pour toute trame inactive courante successive de cette période inactive, à :
- analyser et mémoriser le spectre de fréquences de cette trame inactive courante ;
- comparer le spectre de fréquences de cette trame inactive courante à un spectre de fréquences de référence, et sur critère d'identité des spectres de fréquences de la trame courante et de référence :
- surseoir à toute transmission, notamment celle d'une nouvelle trame de description de silence pendant cette trame inactive courante, et sur critère d'absence d'identité des spectres de fréquences de la trame courante et de référence :
- engendrer et transmettre une nouvelle trame de description de silence pendant cette trame inactive courante, ce qui permet de réduire le débit de transmission du bruit de confort à celui des seules trames de description de silence dont le spectre de fréquences est différent de celui de référence estimé pendant la trame de description de silence précédente.

**2.** Procédé selon la revendication 1, **caractérisé en ce que** le spectre de fréquences de référence est formé à partir du spectre de fréquences du bruit ambiant estimé et mémorisé lors de la création de chaque trame de description de silence.

**3.** Procédé de création d'une trame de description de silence pour engendrer un bruit de confort selon le procédé de l'une des revendications 1 ou 2, **caractérisé en ce qu'**il comprend les étapes consistant à :

- effectuer une mesure de stationnarité locale du spectre de fréquences d'une pluralité de trames inactives successives antérieures à la trame inactive courante ;
- déterminer le spectre de fréquences moyen desdites trames inactives successives pour établir un spectre de fréquences moyen passé ;
- et, sur critère d'identité ou d'absence d'identité du spectre de fréquences moyen passé et du spectre de fréquences de la trame inactive courante, sélectionner, pour élaborer la trame de description de silence, respectivement ledit spectre de fréquences moyen passé ou ledit spectre de la trame inactive courante, ce qui permet d'estimer le spectre de silence pour toute trame de description de silence en prenant en compte le fait que ladite trame inactive courante appartient, soit à une zone spectrale localement stationnaire, soit à une zone spectrale non stationnaire.

**4.** Procédé selon la revendication 1 **caractérisé en ce que** celui-ci consiste, à la réception des trames de description de silence étant transmises à l'émission, en liaison avec un décodeur de parole, à :

- décoder, pour chaque trame de description de silence, successive, l'ensemble des paramètres codés descriptifs du bruit de confort, pour engendrer des paramètres décodés ;
- synthétiser, au niveau du décodeur de parole, après traitement des paramètres décodés, le bruit de confort correspondant.

**5.** Dispositif de création d'un bruit de confort dans un système de transmission numérique de parole discontinue, dans lequel le signal de parole est transmis pendant une période active, pendant laquelle des trames actives sont transmises, chaque période active étant suivie d'une période inactive, pendant laquelle au moins des trames inactives sont transmises, ce dispositif étant adapté à l'émission des trames de description de silence et constituant un générateur de bruit de confort comportant :

- des moyens de création et de transmission conditionnelle, sur détection d'une période inactive, d'une trame de description de silence, consistant en un ensemble de paramètres codés descriptifs du bruit de confort, cette trame de description de silence constituant la première trame de description de silence de la période inactive suivant cette période active ; le dispositif étant **caractérisé en ce qu'**il comporte :
- des moyens d'analyse et de mémorisation du spectre de fréquences de toute trame inactive courante successive de cette période inactive ;
- des moyens de comparaison du spectre de fréquences de cette trame inactive courante à un spectre de fréquences de référence délivrant un signal de commande déterminé sur critère d'identité et d'absence d'identité des spectres de fréquences de la trame courante et de référence ;
- des moyens de commande d'inhibition et d'autorisation respectivement de la transmission d'une nouvelle trame de description de silence pendant cette trame inactive courante, recevant ledit signal de commande déterminé délivré par les moyens de comparaison, ce qui permet de surseoir à toute transmission notamment celle d'une nouvelle trame de description de silence lors de l'identité des spectres de fréquences de la trame courante et de référence, et de réaliser la transmission d'une nouvelle trame de description de silence lors de l'absence d'identité des spectres de fréquences de la trame courante et de référence, le débit de transmission du bruit de confort étant ainsi réduit à celui des seules trames de description de silence dont le spectre de fréquences est différent de celui de référence estimé pendant la trame de description de silence précédente.

**6.** Dispositif selon la revendication 5, **caractérisé en ce que** le système de transmission comportant un dispositif d'activité vocale délivrant un signal d'activité vocale, un codeur de parole prédictif, ce codeur effectuant une analyse du signal de parole au moyen d'un filtre LPC délivrant un signal de fonction d'autocorrélation du signal de parole, un signal descriptif des paramètres de filtrage LPC relatifs à la trame précédente, et, conditionnellement, un signal d'excitation d'au moins une trame précédente, ledit dispositif comprend, constituant le générateur de bruit de confort :

- un module de calcul des paramètres relatifs à la trame courante recevant le signal de fonction d'autocorrélation du signal de parole et adapté à produire les signaux correspondant aux paramètres de la trame courante ;
- un module de décision d'émission d'une trame de parole codée, d'une trame de description de silence ou de suspension d'émission, ce module de décision étant adapté à recevoir ledit signal d'activité vocale et les signaux correspondant aux paramètres de la trame courante et aux paramètres de référence et étant adapté à délivrer un signal de type de transmission de trame à trois niveaux, un premier niveau correspondant à l'absence totale d'émission pendant une trame courante inactive, un deuxième niveau correspondant à l'émission d'une trame de parole codée pendant une trame active, et un troisième niveau correspondant à l'émission d'une trame de description de silence pendant une trame inactive ;
- un module de calcul conditionnel de paramètres de référence, ce module étant adapté à recevoir en entrée le signal de fonction d'autocorrélation du signal de parole et les signaux correspondant aux paramètres de la trame courante, et étant adapté à délivrer un signal de paramètres de référence ;
- un module générateur de trame de description de silence codée étant adapté à recevoir le signal de type de transmission, les signaux correspondant aux paramètres de référence et étant adapté à délivrer conditionnellement un signal de trame de description de silence codé ;
- un module générateur d'un signal d'excitation étant adapté à recevoir le signal de type de transmission, et, conditionnellement, le signal d'excitation passée fourni par le codeur de parole et étant adapté à délivrer conditionnellement au signal de type de transmission de trame un signal d'excitation pour la trame courante ;
- un module générateur d'un signal descriptif des paramètres de filtrage LPC réactualisés, étant adapté à recevoir le signal de type de transmission de trame, un signal descriptif des paramètres LPC des trames précédentes délivré par le codeur de parole et étant adapté à délivrer conditionnellement au signal de type de transmission de trame un signal descriptif des paramètres LPC réactualisé pour la trame courante.

**7.** Dispositif selon la revendication 5, **caractérisé en ce que** ce dispositif est adapté à la réception des trames de description de silence transmises à l'émission et comprend des moyens de décodage dans chaque trame de description de silence, successive, de l'ensemble des paramètres codés descriptifs du bruit de confort, lesdits moyens étant adaptés à recevoir une information relative au type de trame courante traitée, un signal de trame de description de silence codé, et, d'un décodeur de parole, un signal de gestion assurant un fonctionnement synchrone avec le décodeur de parole, pour engendrer des paramètres décodés comportant un signal descriptif du bruit de confort relatif à la trame courante, lesdits moyens de décodage étant interconnectés à un décodeur de signal de parole étant adapté à recevoir, d'une part, les trames de parole codées, et, d'autre part, ledit signal descriptif du bruit de confort relatif à la trame courante, ledit décodeur de parole étant adapté à délivrer par synthèse un signal de parole respectivement un bruit de confort synthétisé.

**8.** Dispositif selon la revendication 7, **caractérisé en ce que**, dans le cas où ledit décodeur de signal de parole est formé par un décodeur prédictif, lesdits moyens de décodage comportent au moins :

- un démultiplexeur étant adapté à recevoir le signal de trame de description de silence codée transmis et étant adapté à délivrer un signal codé descriptif des paramètres de filtrage LPC relatifs à la trame courante et un signal d'indice de gain quantifié, descriptif du signal d'excitation synthétisé ;
- un module déquantificateur étant adapté à recevoir le signal d'indice de gain quantifié et étant adapté à délivrer un signal de gain déquantifié ;
- un module de calcul étant adapté à recevoir le signal codé descriptif des paramètres de filtrage LPC relatifs à la trame courante, le signal descriptif des paramètres de filtrage LPC relatifs au moins à la trame précédente et l'information de type de transmission de trame et étant adapté à délivrer le signal mis à jour avec les paramètres LPC relatifs à la trame courante ;
- un module générateur d'excitation étant adapté à recevoir le signal de gain déquantifié, conditionnellement le signal d'excitation passée et l'information de type de transmission de trame et étant adapté à délivrer le signal d'excitation relatif à la trame courante.

## Patentansprüche

**1.** Verfahren zur Erzeugung eines Hintergrundrauschens in einem digitalen unterbrochenen Sprachübertragungssystem, bei dem das codierte Sprachsignal während eines aktiven Zeitintervalls übertragen wird, während dem aktive Rahmen übertragen werden, wobei auf jedes aktive Zeitintervall ein inaktives Zeitintervall folgt, während dem mindestens inaktive Rahmen übertragen werden, wobei dieses Verfahren beim Senden nach Erfassung eines inaktiven Zeitintervalls darin besteht:

- einen Rahmen zur Ruhebeschreibung zu erzeugen und zu übertragen, welcher aus einer Gruppe von codierten, das Hintergrundrauschen beschreibenden Parametern besteht, wobei dieser Rahmen zur Ruhebeschreibung den ersten Rahmen zur Ruhebeschreibung des inaktiven Zeitintervalls, das auf dieses aktive Zeitintervall folgt, darstellt; wobei dieses Verfahren **dadurch gekennzeichnet ist, dass** es darin besteht, für jeden auf dieses inaktive Zeitintervall folgenden, laufenden inaktiven Rahmen:

- das Frequenzspektrum dieses laufenden inaktiven Rahmens zu analysieren und zu speichern,

- das Frequenzspektrum dieses laufenden inaktiven Rahmens mit einem Bezugsfrequenzspektrum zu vergleichen, und bei Gleichheit des Frequenzspektrums des laufenden Rahmens und des Bezugsfrequenzspektrums:

- Aussetzen jeglicher Übertragung, insbesondere der eines neuen Rahmens zur Ruhebeschreibung während dieses laufenden inaktiven Rahmens, und wenn das Frequenzspektrum des laufenden Rahmens und das Bezugsfrequenzspektrum nicht gleich sind:

- Erzeugung und Übertragung eines neuen Rahmens zur Ruhebeschreibung während dieses laufenden inaktiven Rahmens, was es gestattet, die Übertragungsleistung des Hintergrundrauschens auf die allein der Rahmen zur Ruhebeschreibung zu verringern, deren Frequenzspektrum sich vom Bezugsfrequenzspektrum unterscheidet, das während des vorhergehenden Rahmens zur Ruhebeschreibung geschätzt wurde.

2. Verfahren nach Anspruch 1,
**dadurch gekennzeichnet, dass** das Bezugsfrequenzspektrum ausgehend vom Frequenzspektrum der geschätzten Umgebungsgeräusche gebildet wird und bei der Erzeugung jedes Rahmens zur Ruhebeschreibung gespeichert wird.

3. Verfahren zur Erzeugung eines Rahmens zur Ruhebeschreibung zur Erzeugung eines Hintergrundrauschens nach dem Verfahren eines der Ansprüche 1 oder 2,
**dadurch gekennzeichnet, dass** es die Schritte umfasst, welche darin bestehen:

- eine Messung der lokalen Stationarität des Frequenzspektrums einer Vielzahl von dem laufenden inaktiven Rahmen vorausgehenden, aufeinanderfolgenden inaktiven Rahmen vorzunehmen;

- das mittlere Frequenzspektrum der aufeinanderfolgenden inaktiven Rahmen zu bestimmen, um ein mittleres Frequenzspektrum der Vergangenheit zu bestimmen;

- und bei Gleichheit oder Nicht-Gleichheit des mittleren Frequenzspektrums der Vergangenheit und des Frequenzspektrums des laufenden inaktiven Rahmens entweder das mittlere Frequenzspektrum der Vergangenheit oder das Frequenzspektrum des laufenden inaktiven Rahmens zur Erstellung des Rahmens zur Ruhebeschreibung auszuwählen, was es erlaubt, das Ruhespektrum für jeden Rahmen zur Ruhebeschreibung zu schätzen, unter Berücksichtigung der Tatsache, dass der laufende inaktive Rahmen entweder zu einem lokal stationären Spektralbereich oder zu einem nicht-stationären Spektralbereich gehört.

4. Verfahren nach Anspruch 1,
**dadurch gekennzeichnet, dass** dieses darin besteht, bei Empfang der Rahmen zur Ruhebeschreibung, die beim Senden übertragen wurden, in Verbindung mit einem Sprach-Decoder:

- die Gruppe der codierten, das Hintergrundrauschen beschreibenden Parameter für jeden aufeinanderfolgenden Rahmen zur Ruhebeschreibung zu decodieren, um decodierte Parameter zu erzeugen;

- das entsprechende Hintergrundrauschen nach Verarbeitung der decodierten Parameter im Bereich des Sprach-Decoders zu synthetisieren.

5. Vorrichtung zur Erzeugung eines Hintergrundrauschens in einem digitalen unterbrochenen Sprachübertragungssystem, bei dem das Sprachsignal während eines aktiven Zeitintervalls übertragen wird, während dem aktive Rahmen übertragen werden, wobei auf jedes aktive Zeitintervall ein inaktives Zeitintervall folgt, während dem mindestens inaktive Rahmen übertragen werden, wobei diese Vorrichtung zum Senden der Rahmen zur Ruhebeschreibung geeignet ist und einen Erzeuger von Hintergrundrauschen darstellt, welcher umfasst:

- Mittel zur Erzeugung und bedingten Übertragung eines Rahmens zur Ruhebeschreibung, welcher von einer Gruppe von codierten, das Hintergrundrauschen beschreibenden Parametern gebildet ist, bei Erfassung eines inaktiven Zeitintervalls, wobei dieser Rahmen zur Ruhebeschreibung den ersten Rahmen zur Ruhebeschreibung des inaktiven Zeitintervalls darstellt, welches auf dieses aktive Zeitintervall folgt; wobei die Vorrichtung **dadurch gekennzeichnet ist, dass** sie umfasst:

- Mittel zum Analysieren und Speichern des Frequenzspektrums jedes laufenden inaktiven Rahmens, der auf dieses inaktive Zeitintervall folgt;

- Mittel zum Vergleichen des Frequenzspektrums dieses laufenden inaktiven Rahmens mit einem Bezugsfrequenzspektrum, die bei Gleichheit, und Nicht-Gleichheit des Frequenzspektrums des laufenden Rahmens und des Bezugsfrequenzspektrums ein bestimmtes Steuersignal liefern;

- Steuerungsmittel zum Verhindern bzw. Zulassen der Übertragung eines neuen Rahmens zur Ruhebeschreibung während diesem laufenden inaktiven Rahmen, welche das bestimmte, von den Vergleichsmitteln gelieferte Steuersignal empfangen, was es ermöglicht, jegliche Übertragung, insbesondere die Übertragung eines neuen Rahmens zu Ruhebeschreibung, bei Gleichheit des Frequenzspektrums des laufenden Rahmens und des Bezugsfrequenzspektrums auszusetzen und einen neuen Rahmen zur Ruhebeschreibung bei Nicht-Gleichheit des Frequenzspektrums des laufenden Rahmens und des Bezugsfrequenzspektrums zu übertragen, wobei die Übertragungsleistung des Hintergrundrauschens so auf die allein der Rahmen zur Ruhebeschreibung verringert wird, deren Frequenzspektrum sich vom Bezugsfrequenzspektrum unterscheidet, das während des vorhergehenden Rahmens zur Ruhebeschreibung geschätzt wurde.

6. Vorrichtung nach Anspruch 5,
**dadurch gekennzeichnet, dass** das Übertragungssystem eine Sprechaktivitätsvorrichtung umfasst, die ein Sprechaktivitätssignal liefert, einen vorhersagenden Sprachcodierer, wobei dieser Codierer das Sprachsignal mittels eines LPC-Filters zerlegt, welcher ein Autokorrelationssignal des Sprachsignals, ein Signal, das die LPC-Filterparameter bezüglich des vorausgehenden Rahmens beschreibt, und bedingt ein Auslösesignal wenigstens eines vorausgehenden Rahmens liefert, wobei die Vorrichtung, die den Erzeuger von Hintergrundrauschen darstellt, umfasst:

- ein Modul zum Berechnen für die Parameter bezüglich des laufenden Rahmens, welches das Autokorrelationssignal des Sprachsignals empfängt und geeignet ist, die den Parametern des laufenden Rahmens entsprechenden Signale zu erzeugen;

- ein Modul, das über das Senden eines codierten Sprachrahmens, eines Rahmens zur Ruhebeschreibung oder über das Nicht-Senden entscheidet, wobei dieses Entscheidungsmodul geeignet ist, das Sprechaktivitätssignal und die den Parametern des laufenden Rahmens und den Bezugsparametern entsprechenden Signale zu empfangen und ein Signal des Typs zur Übertragung von dreiwertigen Rahmen zu liefern, wobei ein erster Wert dem absoluten Nichtvorhandensein eines Sendens während einem laufenden inaktiven Rahmen entspricht, ein zweiter Wert dem Senden eines codierten Sprachrahmens bei einem aktiven Rahmen entspricht und ein dritter Wert dem Senden eines Rahmens zur Ruhebeschreibung bei einem inaktiven Rahmen beschreibt;

- ein Modul zum bedingten Berechnen von Bezugsparametern, wobei dieses Modul geeignet ist, eingangs das Autokorrelationssignal des Sprachsignals und die den Parametern des laufenden Rahmens entsprechenden Signale zu empfangen, und ein Signal mit den Bezugsparametern zu liefern;

- ein Modul zur Erzeugung eines codierten Rahmens zur Ruhebeschreibung, welches geeignet ist, das Übertragungssignal, die den Bezugsparametern entsprechenden Signale zu empfangen und bedingt ein codiertes Signal des Rahmens zur Ruhebeschreibung zu liefern;

- ein Modul zur Erzeugung eines Auslösesignals, welches geeignet ist, das Übertragungssignal und bedingt das von dem Sprachcodierer gelieferte Auslösesignal zu empfangen, und welches geeignet ist, bedingt dem Rahmenübertragungssignal ein Auslösesignal für den laufenden Rahmen zu liefern;

- ein Modul zur Erzeugung eines die wieder aktualisierten LPC-Filterparameter beschreibenden Signals, welches geeignet ist, das Rahmenübertragungssignal, ein von dem Sprachcodierer geliefertes, die LPC-Parameter der vorausgehenden Rahmen beschreibendes Signal zu empfangen, und bedingt dem Rahmenübertragungssignal ein wieder aktualisiertes, die LPC-Parameter beschreibendes Signal für den laufenden Rahmen zu liefern.

7. Vorrichtung nach Anspruch 5,
**dadurch gekennzeichnet, dass** diese Vorrichtung für den Empfang von Rahmen zur Ruhebeschreibung, die beim Senden übertragen werden, geeignet ist, und auf die Gruppe der codierten, das Hintergrundrauschen beschreibenden Parameter folgend in jedem Rahmen zur Ruhebeschreibung Decodiermittel umfasst, wobei die Mittel geeignet sind, eine auf den Typ des laufenden verarbeiteten Rahmens bezogene Information zu empfangen, ein codiertes Signal über den Rahmen zur Ruhebeschreibung und von einem Sprach-Decoder ein Verwaltungssignal, das eine zum Sprach-Decoder synchron verlaufende Arbeitsweise sicherstellt, um decodierte Parameter zu erzeugen, die ein das Hintergrundrauschen beschreibendes Signal bezüglich des laufenden Rahmens umfassen, wobei die mit einem Sprachsignal-Decoder zusammengeschalteten Decodiermittel geeignet sind, einerseits die codierten Sprachrahmen und andererseits das das Hintergrundrauschen beschreibende Signal bezüglich des laufenden Rahmens zu empfangen, wobei der Sprach-Decoder geeignet ist, durch Synthese ein Sprachsignal bzw. ein synthetisiertes Hintergrundrauschen zu liefern.

8. Vorrichtung nach Anspruch 7,

**dadurch gekennzeichnet, dass** für den Fall, dass der Sprachsignal-Decoder von einem vorhersagenden Decoder gebildet ist, die Decodiermittel mindestens umfassen:

- einen Demultiplexer, der geeignet ist, das übertragene Signal des codierten Rahmens zur Ruhebeschreibung zu empfangen und ein codiertes, die LPC-Parameter bezüglich des laufenden Rahmens beschreibendes Signal und ein Signal über den quantifizierten Verstärkungsindex zu liefern, welches das synthetisierte Auslösesignal beschreibt;

- ein Dequantifikatormodul, das geeignet ist, das Signal über den quantifizierten Verstärkungsindex zu empfangen und ein dequantifiziertes Verstärkungssignal zu liefern;

- ein Rechenmodul, das geeignet ist, das codierte, die LPC-Filterparameter bezüglich des laufenden Rahmens beschreibende Signal zu empfangen, das die LPC-Filterparameter bezüglich mindestens des vorausgehenden Rahmens beschreibende Signal und die Rahmenübertragungsinformation zu empfangen, und das geeignet ist, das aktualisierte Signal mit den LPC-Parametem bezüglich des laufenden Rahmens zu liefern;

- ein Auslöseerzeugungsmodul, das geeignet ist, das dequantifizierte Verstärkungssignal, bedingt das Auslösesignal und die Rahmenübertragungsinformation zu empfangen, und das Auslösesignal bezüglich des laufenden Rahmens zu liefern.

## Claims

1. Process for creating comfort noise in a system for the digital transmission of discontinuous speech, in which the coded speech signal is transmitted during an active period, during which active frames are transmitted, each active period being followed by an inactive period, during which at least inactive frames are transmitted, this process consisting, at the sending end, on detecting an inactive period, in:

   - generating and transmitting a silence descriptor frame, consisting of a set of coded parameters describing the comfort noise, this silence descriptor frame constituting the first silence descriptor frame of the inactive period following this active period; the process being **characterized in that** it consists, for every successive current inactive frame of this inactive period, in:
   - analysing and storing the frequency spectrum of this current inactive frame;
   - comparing the frequency spectrum of this current inactive frame with a reference frequency spectrum, and upon criterion of identity of the reference and current frame frequency spectra:
   - deferring any transmission, especially that of a new silence descriptor frame during this current inactive frame, and upon criterion of absence of identity of the reference and current frame frequency spectra:
   - generating and transmitting a new silence descriptor frame during this current inactive frame, this making it possible to reduce the transmission rate of the comfort noise to that of merely the silence descriptor frames whose frequency spectrum is different from the reference spectrum estimated during the preceding silence descriptor frame.

2. Process according to Claim 1, **characterized in that** the reference frequency spectrum is formed from the frequency spectrum of the ambient noise estimated and stored during the creation of each silence descriptor frame.

3. Process for creating a silence descriptor frame in order to generate comfort noise according to the process of one of the claims 1 or 2, **characterized in that** it comprises the steps consisting in:

   - making a measurement of local stationarity of the frequency spectrum of a plurality of successive inactive frames previous to the current inactive frame;
   - determining the mean frequency spectrum of the said successive inactive frames in order to establish a past mean frequency spectrum;

   and, upon criterion of identity or of absence of identity of the past mean frequency spectrum and of the frequency spectrum of the current inactive frame, selecting, in order to compute the silence descriptor frame, respectively said past mean frequency spectrum or said spectrum of the current inactive frame, this making it possible to estimate the silence spectrum for every silence descriptor frame by taking into account the fact that the said current inactive frame belongs either to a locally stationary spectral zone or to a nonstationary spectral zone.

**4.** Process according to Claim 1 **characterized in that** it consists at the receiving end, silence descriptor frames being transmitted at the sending end, in conjunction with a speech decoder, in:

- decoding, for each successive silence descriptor frame, the set of coded parameters describing the comfort noise, in order to generate decoded parameters;
- synthesizing, at the level of the speech decoder, after processing the decoded parameters, the corresponding comfort noise.

**5.** Device for creating comfort noise in a system for the digital transmission of discontinuous speech, in which the speech signal is transmitted during an active period, during which active frames are transmitted, each active period being followed by an inactive period, during which at least inactive frames are transmitted, this device being adapted, at the sending end of silence descriptor frames and constituting a comfort noise generator comprising:

- means for creating and conditionally transmitting, upon detecting an inactive period, a silence descriptor frame, consisting of a set of coded parameters describing the comfort noise, this silence descriptor frame constituting the first silence descriptor frame of the inactive period following this active period; the device being **characterized in that** it comprises:
- means of analysing and storing the frequency spectrum of every successive current inactive frame of this inactive period;
- means of comparing the frequency spectrum of this current inactive frame with a reference frequency spectrum delivering a specified command signal upon criterion of identity and of absence of identity of the reference and current frame frequency spectra;
- means of commanding the disabling and enabling respectively of the transmission of a new silence descriptor frame during this current inactive frame, receiving the said specified command signal delivered by the comparing means, this making it possible to defer any transmission especially that of a new silence descriptor frame upon the identity of the reference and current frame frequency spectra, and to carry out the transmission of a new silence descriptor frame upon the absence of identity of the reference and current frame frequency spectra, the rate of transmission of the comfort noise thus being reduced to that of merely the silence descriptor frames whose frequency spectrum is different from the reference spectrum estimated during the preceding silence descriptor frame.

**6.** Device according to Claim 5, **characterized in that** the transmission system including a voice activity device delivering a voice activity signal, a predictive speech coder, this coder performing an analysis of the speech signal by means of an LPC filter delivering an autocorrelation function signal for the speech signal, a signal describing the LPC filtering parameters relating to the preceding frame, and, conditionally, an excitation signal of at least one preceding frame, the said device comprises, constituting the comfort noise generator:

- a module for calculating the parameters relating to the current frame receiving the autocorrelation function signal for the speech signal and producing the signals corresponding to the parameters of the current frame;
- a decision module for sending a coded speech frame, a silence descriptor frame or for suspending sending, this decision module being adapted to receive the said voice activity signal and the signals corresponding to the parameters of the current frame and to the reference parameters and being adapted to deliver a frame transmission type signal having three levels, a first level corresponding to the total absence of sending during an inactive current frame, a second level corresponding to the sending of a coded speech frame during an active frame, and a third level corresponding to the sending of a silence descriptor frame during an inactive frame;
- a module for the conditional calculation of reference parameters, this module being adapted to receive as input the autocorrelation function signal for the speech signal and the signals corresponding to the parameters of the current frame, and being adapted to deliver a reference parameters signal;
- a coded silence descriptor frame generator module being adapted to receive the transmission type signal, the signals corresponding to the reference parameters and conditionally being adapted to deliver a coded silence descriptor frame signal;
- a module generating an excitation signal being adapted to receive the transmission type signal, and, conditionally, the past excitation signal supplied by the speech coder and being adapted to deliver conditionally on the frame transmission type signal an excitation signal for the current frame;
- a module generating a signal describing the updated LPC filtering parameters, being adapted to receive the frame transmission type signal, a signal describing the LPC parameters of the preceding frames which is delivered by the speech coder, and being adapted to deliver conditionally on the frame transmission type signal

a signal describing the updated LPC parameters for the current frame.

7. Device according to Claim 5, **characterized in that** this device is adapted at the receiving end of silence descriptor frames transmitted at the sending end, and comprises means for decoding in each successive silence descriptor frame the set of coded parameters describing the comfort noise, the said means being adapted to receive a cue relating to the type of current frame processed, a coded silence descriptor frame signal and, from a speech decoder, a management signal ensuring synchronous operation with the speech decoder, in order to generate decoded parameters including a signal describing the comfort noise relating to the current frame, the said decoding means being interconnected with a speech signal decoder being adapted to receive, on the one hand, the coded speech frames, and, on the other hand, the said signal describing the comfort noise relating to the current frame, the said speech decoder being adapted to deliver by synthesis a speech signal respectively a synthesized comfort noise.

8. Device according to Claim 7, **characterized in that**, in the case in which the said speech signal decoder is formed by a predictive decoder, the said decoding means include at least:

- a demultiplexer being adapted to receive the transmitted coded silence descriptor frame signal and being adapted to deliver a coded signal describing the LPC filtering parameters relating to the current frame and a quantized gain index signal describing the synthesized excitation signal;
- a dequantizer module being adapted to receive the quantized gain index signal and being adapted to deliver a dequantized gain signal;
- a calculation module being adapted to receive the coded signal describing the LPC filtering parameters relating to the current frame, the signal describing the LPC filtering parameters relating at least to the preceding frame and the frame transmission type cue and being adapted to deliver the updated signal with the LPC parameters relating to the current frame;
- an excitation generator module being adapted to receive the dequantized gain signal, conditionally the past excitation signal and the frame transmission type cue and being adapted to deliver the excitation signal relating to the current frame.

FIG.1.(ART ANTÉRIEUR)

PÉRIODE INACTIVE

PÉRIODE ACTIVE

DÉTECTION    TRAME SID

100

NOUVELLE
TRAME SID

PÉRIODE
ACTIVE

TRAME INACTIVE
COURANTE

**FIG.2a.**

ANALYSE ET MÉMORISATION
DU SPECTRE DE FRÉQUENCES
TRAME COURANTE   SFc

101

102

COMPARAISON
SFc , SFr
IDENTITÉ

+

104

ABSENCE
DE
TRASMISSION

−

103

MÉMORISATION
BRUIT
AMBIANT SFr

CRÉATION  ET TRANSMISSION
D'UNE  NOUVELLE
TRAME  SID

100

ÉMISSION

**FIG. 2b.**

CALCUL DU SPECTRE
MOYEN  PASSÉ
$SF_{mp} = \frac{1}{n} \sum_{1}^{n} SF_i$

1041

1042

$SF_c \equiv SF_{mp}$

−                              +

1044

TRAME SID=
SFc

1043

TRAME SID=
SFmp

FIG.2c.

DÉCODAGE TRAME SID RECUE — 200

SYNTHÈSE DU BRUIT DE CONFORT — 201

PÉRIODE INACTIVE

PÉRIODE ACTIVE

DÉTECTION — TRAME SID — 100'

NOUVELLE TRAME SID

PÉRIODE ACTIVE

FIG.2d.

TRAME COURANTE

MÉMORISATION DU FILTRE COURANT Fc — 101'

COMPARAISON Fc, Fr IDENTITÉ — 102'

ESTIMATION ÉNERGIE EXCITATION Ec TRAME COURANTE — 104'a

MÉMORISATION FILTRE DE RÉFÉRENCE Fr — 103'

$E_c - E_r > E_0$ — 104'c

ESTIMATION ÉNERGIE EXCITATION $E_r$ DE RÉFÉRENCE — 104'b

CRÉATION ET TRANSMISSION D'UNE NOUVELLE TRAME SID — 100'

ABSENCE DE TRANSMISSION — 104'd

100'

FIG. 2e.

SIGNAL DE PAROLE

CODEUR DE PAROLE — 1

TRAMES PAROLE CODÉES

4 — MUX

2 — DAV

Sg

3

ANALYSE SFc — 3b

SFc

CMP

CMP SFc SFr — 3c

SFc

CRÉATION TRAME SID — 3a

SFr

3d

CALCUL VAD OUT

VAD OUT

VAD IN

TRAMES SID CODÉES

FIG. 3a.

SIGNAL ENTRÉE

CODEUR PRÉDICTIF — 1

TRAMES PAROLE CODÉES

4 — MUX

2 — DAV

Acf    Exc    Lpc

3

VAD IN

COD-CNG

TRAMES SID CODÉES VAD OUT

# FIG.3b.

# FIG.3c.

CALCUL DE VAD OUT SI VAD IN(t)=0

# FIG.3d.

CALCUL $A_{post}(Z)$ —1100

OUI ⟨DIST$(A_t(Z), A_{post}(Z))$>SEUIL 1⟩ NON —1101

$A_{ref}(Z)=A_t(Z)$ —1103

—1102 $A_{ref}(Z)=A_{post}(Z)$

CODAGE D'UNE TRAME SID
(CAS VAD OUT = 2 )

$Q\left[A_{ref}(Z)\right]$ —1104

$I_{ref}=i(t)$ —1105

$j=0$ —1201

TIRAGE PARAMÈTRES LTP $\Rightarrow e_{LTP}(jL+k), k=0\to L-1$ —1202

TIRAGE CODES INNOVATION $\Rightarrow u(jL+k), k=0\to L-1$ —1203

CALCUL ind tq
$$\left|\frac{1}{L}\sum_{k=0}^{L-1}(e_{LTP}(n)+\beta u(n))^2 - g_t^2\right|_{min}$$
AVEC $\beta=Q^{-1}\left[Q(ind)\right], n=jL+k$ —1204

$Exc(n)=e_{LTP}(n)+\beta u(n), k=0\to k-1 \; n=jL+k$ —1205

$j=j+1$ —1206

OUI ⟨$j<N/L$⟩ NON —1207 FIN

# FIG.3e.

FIG.4a.

SCHÉMA CNG-PARTIE RÉCEPTION

FIG.4b.

FONCTIONNEMENT GLOBAL DEC-CNG
POUR VAD = 0 ou 2